(19) **Europäisches Patentamt / European Patent Office / Office européen des brevets**

(11) **EP 4 258 775 B1**

(12) **EUROPEAN PATENT SPECIFICATION**

(45) Date of publication and mention
of the grant of the patent:
**06.05.2026 Bulletin 2026/19**

(21) Application number: **20967916.6**

(22) Date of filing: **31.12.2020**

(51) International Patent Classification (IPC):
**H04W 72/25** (2023.01)    **H04W 72/02** (2009.01)
**H04W 72/40** (2023.01)

(52) Cooperative Patent Classification (CPC):
**H04W 72/25; H04W 72/02; H04W 72/40**

(86) International application number:
**PCT/CN2020/142516**

(87) International publication number:
**WO 2022/141578 (07.07.2022 Gazette 2022/27)**

(54) **COMMUNICATION METHOD, APPARATUS AND SYSTEM**

KOMMUNIKATIONSVERFAHREN, -VORRICHTUNG UND -SYSTEM

PROCÉDÉ, APPAREIL ET SYSTÈME DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.10.2023 Bulletin 2023/41**

(73) Proprietor: **Huawei Technologies Co., Ltd.**
**Shenzhen, Guangdong 518129 (CN)**

(72) Inventors:
- **GUO, Wenting**
  **Shenzhen, Guangdong 518129 (CN)**
- **SU, Hongjia**
  **Shenzhen, Guangdong 518129 (CN)**
- **DONG, Lei**
  **Shenzhen, Guangdong 518129 (CN)**
- **LU, Lei**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**CN-A- 110 545 533    CN-A- 111 934 835**

- **MODERATOR (LG ELECTRONICS): "Feature lead summary for AI 8.11.2.2 Feasibility and benefits for mode 2 enhancements", vol. RAN WG1, no. e-Meeting; 20201026 - 20201113, 19 November 2020 (2020-11-19), XP051955958, Retrieved from the Internet <URL:https://ftp.3gpp.org/tsg_ran/ WG1_RL1/TSGR1_103-e/Docs/R1-2009788.zip R1-2009788 FL summary for AI 8.11.2.2.docx> [retrieved on 20201119]**
- **APPLE: "Discussion on Inter-UE Coordination for Mode 2 Resource Allocation", vol. RAN WG1, no. e-Meeting; 20201026 - 20201113, 1 November 2020 (2020-11-01), XP052350375, Retrieved from the Internet <URL:https://ftp.3gpp.org/tsg_ran/ WG1_RL1/TSGR1_103-e/Docs/R1-2008447.zip R1-2008447 Discussion on Inter-UE Coordination for Mode 2 Resource Allocation.docx> [retrieved on 20201101]**
- **LG ELECTRONICS: "Discussion on feasibility and benefits for mode 2 enhancement", vol. RAN WG1, no. e-Meeting; 20201026 - 20201113, 1 November 2020 (2020-11-01), XP052349257, Retrieved from the Internet <URL:https:// ftp.3gpp.org/tsg_ran/WG1_RL1/TSGR1_103-e/ Docs/R1-2007896.zip R1-2007896 Discussion on sidelink mode 2 enhancement.docx> [retrieved on 20201101]**

- **OPPO: "Physical layer procedure for NR-V2X sidelink", 3GPP DRAFT; R1-1910375 PHY LAYER PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Chongqing, China; 20191014 - 20191020, 8 October 2019 (2019-10-08), Mobile Competence Centre ; 650, route des Lucioles ; F-06921 Sophia-Antipolis Cedex ; France , pages 1 - 12, XP051789180**

## Description

### TECHNICAL FIELD

This application relates to the field of communication technologies, and in particular, to a communication method, apparatus, and system.

### BACKGROUND

With development of wireless communication technologies, vehicle-to-everything (vehicle-to-everything, V2X) communication is increasingly popular. By using the V2X communication, road condition information around a vehicle can be obtained in real time, to better assist driving of the vehicle and even implement autonomous driving.

Currently, a transmission mode of the V2X communication includes a transmission mode 1 that is based on scheduling of a base station, and a transmission mode 2 in which user equipment (user equipment, UE) autonomously selects an SL transmission resource. In the transmission mode 1, the base station uniformly allocates a sidelink (sidelink, SL) transmission resource based on a buffer status report (buffer status report, BSR) of each UE. An advantage of the transmission mode 1 is that the SL transmission resource of each UE is uniformly scheduled by the base station, so that resource collision can be avoided. In the transmission mode 2, a transmit end UE first selects an SL transmission resource of the transmit end UE from a V2X communication resource pool, and then sends a physical sidelink control channel (physical sidelink control channel, PSCCH) and a physical sidelink shared channel (physical sidelink shared channel, PSSCH) to a receive end UE on the SL transmission resource selected by the transmit end UE. Because the UE selects the SL transmission resource based on a sensing result of the UE, without depending on scheduling of the base station, the transmission mode 2 is not restricted by network coverage. That is, the transmit end UE can also perform communication without network coverage.

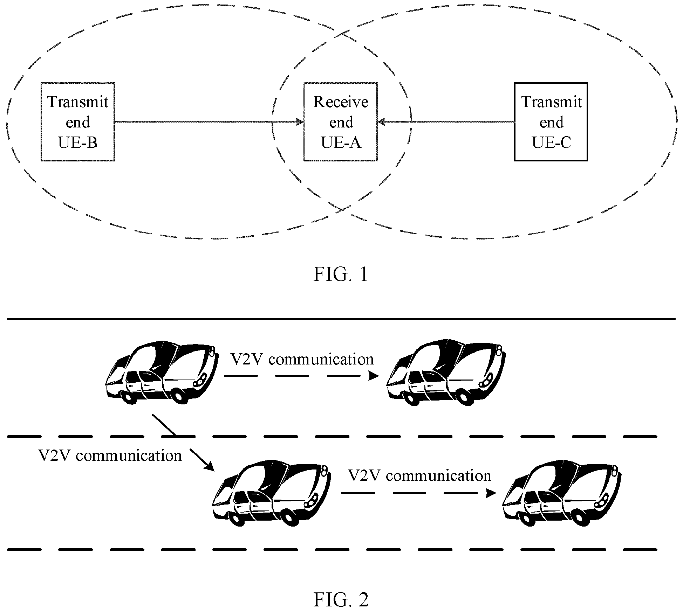

In a scenario of a hidden terminal shown in FIG. 1, a transmit end UE-B and a transmit end UE-C are far away from each other, and cannot sense a signal sent by each other, but a receive end UE-A is located between the transmit end UE-B and the transmit end UE-C, and can receive signals sent by the transmit end UE-B and the transmit end UE-C. If the transmission mode 2 of the existing V2X communication is used, because the transmit end UE-B and the transmit end UE-C cannot perceive presence of each other through sensing, when the transmit end UE-B sends a signal 1 to the receive end UE-A, and the transmit end UE-C sends a signal 2 to the receive end UE-A, an SL transmission resource of the signal 1 and an SL transmission resource of the signal 2 may overlap. Consequently, the signal 1 collides with the signal 2, affecting signal reception of the receive end UE-A. To resolve this problem, the receive end UE-A may send coordination information to the transmit end UE-B, to assist the transmit end UE-B in selecting an SL transmission resource. Alternatively, the receive end UE-A may send coordination information to the transmit end UE-C, to assist the transmit end UE-C in selecting an SL transmission resource.

Currently, in the transmission mode 2 of the existing V2X communication, both a PSSCH and a PSCCH need to be sent for information transmission between UEs. If the coordination information is transmitted through the PSSCH and/or the PSCCH in the V2X communication resource pool, because one PSSCH and/or one PSCCH occupy/occupies at least one sub-channel in one SL slot, each piece of coordination information needs to occupy an SL transmission resource of at least one sub-channel in one SL slot. In this way, resource overheads for transmitting the coordination information are high. In particular, when a plurality of pieces of coordination information need to be transmitted, a large number of physical resources are occupied, and transmission efficiency of other information is affected.

MODERATOR (LG Electronics): "Feature lead summary for AI 8.11.2.2 Feasibility and benefits for mode 2 enhancements", 3GPP DRAFT, R1-2009788, 2020-11-19, discloses how does UE-A transmit "A set of resources" to UE-B including options: Option 1: MAC CE, Option 2: PC5-RRC signaling, Option 3: New 2nd SCI format, Option 4: PSCCH, Option 5: PSFCH, Option 6: Others.

APPLE: "Discussion on Inter-UE Coordination for Mode 2 Resource Allocation", 3GPP DRAFT, R1-2008447, 2020-11-01, discloses using sequence-based signal to deliver inter-UE coordination information. The resources for this sequence-based signal could be the last few symbols of a slot, which are FDM-ed with PSFCH resources.

LG Electronics: "Discussion on feasibility and benefits for mode 2 enhancement", 3GPP DRAFT, R1-2007896, 2020-11-01, discloses inter-UE coordination for mode 2 enhancement. UE-A can determine a set of time-and/or-frequency resources and notify it to UE-B. Then, the UE-B shall perform resource (re)selection procedure with a consideration of this received assistance information from UE-A as per objective in WID.

### SUMMARY

The present invention is set out in the appended set of claims. Embodiments of this application provide a communication method, apparatus, and system, to reduce resource overheads for sending coordination information.

**BRIEF DESCRIPTION OF DRAWINGS**

FIG. 1 is a schematic diagram of a scenario of a hidden terminal;
FIG. 2 is a schematic diagram of a scenario of V2V communication in the conventional technology;
FIG. 3 is a schematic diagram of signal transmission in a transmission mode 1 of V2X communication in the conventional technology;
FIG. 4 is a schematic diagram 1 in which a base station indicates a time domain resource of a V2X communication resource pool by using a bit map in the conventional technology;
FIG. 5a is a schematic diagram 2 in which a base station indicates a time domain resource of a V2X communication resource pool by using a bit map in the conventional technology;
FIG. 5b is a schematic diagram of a time-frequency domain resource of a V2X communication resource pool in the conventional technology;
FIG. 6 is a schematic diagram of PSFCH resource configuration in a period in the conventional technology;
FIG. 7 is a schematic diagram of a bit map of a PSFCH frequency domain resource configured in a V2X communication resource pool in the conventional technology;
FIG. 8 is a schematic diagram of determining a slot in which a PSFCH resource is located based on a minimum time gap K in the conventional technology;
FIG. 9 is a schematic diagram of allocating a PSFCH resource to each sub-channel in a bound PSSCH slot in a manner of time domain first and then frequency domain in the conventional technology;
FIG. 10 is a schematic diagram 1 of SL transmission resource selection in the conventional technology;
FIG. 11 is a schematic diagram of candidate resources in a frequency domain resource of a V2X communication resource pool in the conventional technology;
FIG. 12 is a schematic diagram 2 of SL transmission resource selection in the conventional technology;
FIG. 13 is a schematic diagram of an architecture of a communication system according to an embodiment of this application;
FIG. 14 is a schematic diagram of a structure of a terminal apparatus;
FIG. 15 is a communication method according to an embodiment of this application;
FIG. 16 is a schematic diagram of sending coordination information;
FIG. 17 is another schematic diagram of sending coordination information;
FIG. 18 is a schematic diagram of allocating a resource for sending coordination information to each sub-channel in a bound PSSCH slot in a manner of frequency domain first and then time domain; and
FIG. 19 is a schematic diagram of a structure of a communication apparatus according to an embodiment of this application.

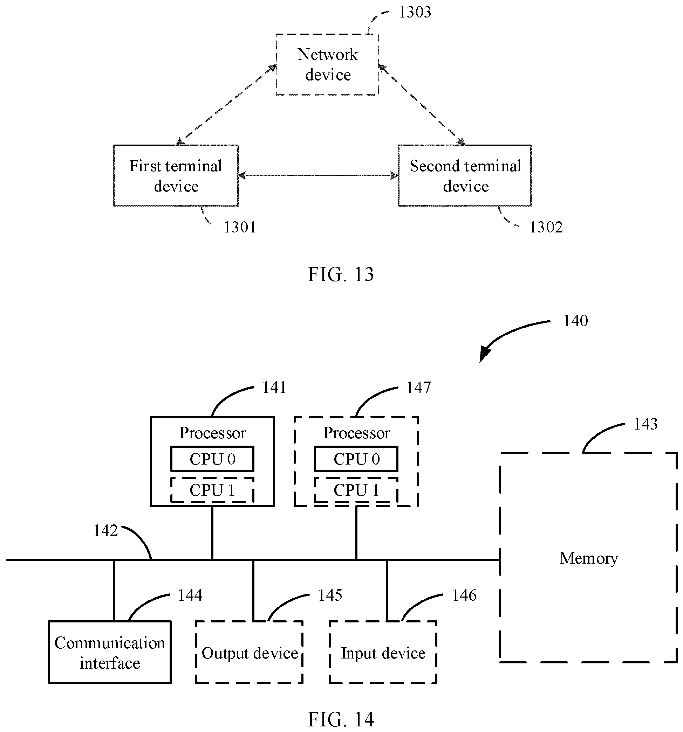

The invention is described by the combination of the embodiments related to figures 13, 15, and 19.

**DESCRIPTION OF EMBODIMENTS**

For ease of understanding technical solutions in embodiments of this application, the following first briefly describes technologies or terms related to this application.

In embodiments of this application, an SL transmission slot is a slot available for SL transmission, a PSFCH resource is a resource available for sending a PSFCH, and a PSFCH slot is a slot that includes the PSFCH resource. In some expressions, a meaning of "transmission" is equivalent to "sending". For example, a "transmission resource" may be understood as a "sending resource", and a "transmission slot" may be understood as a "sending slot", which is uniformly described herein. Details are not described below.

First: Device-to-device (device-to-device, D2D) communication

The D2D communication allows a plurality of UEs that support a D2D function to perform direct discovery and direct communication regardless of whether there is a network device. Correspondingly, an Internet-of-vehicles application scenario based on the D2D communication is also provided. In the Internet-of-vehicles application scenario, to ensure driving safety, a requirement on a communication delay is very high. However, the existing D2D communication cannot technically meet the delay requirement in the Internet-of-vehicles scenario.

Second: Vehicle-to-vehicle (vehicle-to-vehicle, V2V) communication

A typical scenario of the V2V communication is shown in FIG. 2. A moving vehicle may directly exchange information with another nearby vehicle through the V2V communication, to obtain status information and road condition information of the another vehicle in real time, to better assist driving of the vehicle and even implement autonomous driving.

Third: V2X communication

The V2X communication may implement interconnection between a vehicle and the outside by using an apparatus (such as a sensor or an in-vehicle terminal) that is configured on the vehicle and various communication technologies. The V2X communication may include interconnection communication such as V2V, vehicle-to-pedestrian (vehicle-to-pedestrian, V2P), and vehicle-to-roadway infrastructure (vehicle-to-roadway infrastructure, V2I). Information transmission in the V2X communication is based on SL transmission, and may be understood as application of the SL transmission in the Internet of Vehicles.

Fourth: A transmission mode of V2X communication

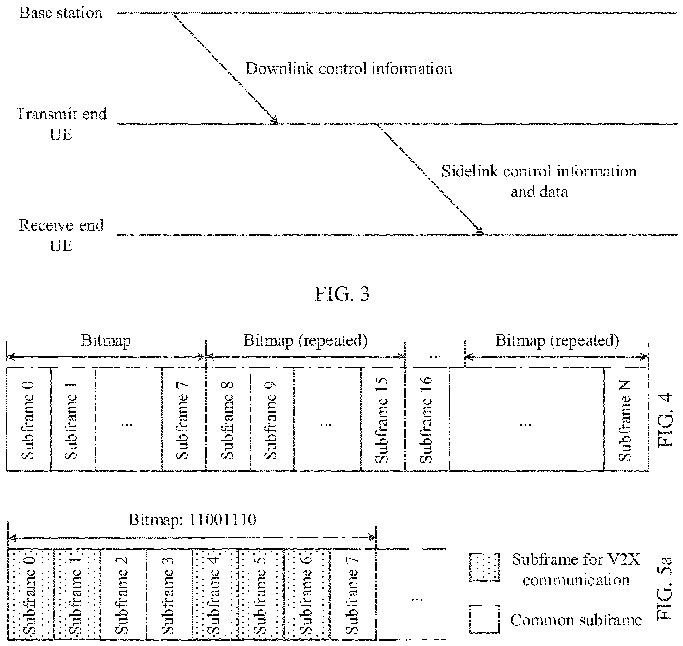

The transmission mode of V2X communication includes a transmission mode 1 based on scheduling of a base station, and a transmission mode 2 in which UE autonomously selects an SL transmission resource.
In the transmission mode 1 shown in FIG. 3, the base station uniformly allocates SL transmission resources based on BSRs of UEs. An allocation mode of the SL transmission resource may be a dynamic mode or a preconfigured mode. Then, the base station may notify a transmit end UE of the SL transmission resource by using downlink control information (downlink control information, DCI). After receiving the DCI, the transmit end UE sends sidelink control information (sidelink control information, SCI) and data to a receive end UE on the SL transmission resource indicated by the DCI. The SCI is transmitted by using a PSCCH, and the data is transmitted by using a PSSCH. An advantage of the transmission mode 1 is that the SL transmission resource of each UE is uniformly scheduled by the base station, so that resource collision can be avoided. However, when the transmit end UE has no network coverage, the transmission mode 1 cannot be used.
In the transmission mode 2, the UE autonomously selects the SL transmission resource from a V2X communication resource pool for communication, without depending on uniform allocation by the base station. Specifically, the transmit end UE first autonomously selects the SL transmission resource of the transmit end UE from the V2X communication resource pool, and then sends the SCI and the data to the receive end UE on the SL transmission resource selected by the transmit end UE. The SCI is transmitted by using a PSCCH, and the data is transmitted by using a PSSCH. Because the UE selects the SL transmission resource based on a sensing result of the UE, without depending on scheduling of the base station, the transmission mode 2 is not restricted by network coverage. That is, the transmit end UE can also perform communication without network coverage. However, in this transmission mode, each UE separately performs sensing and selection of the SL transmission resource. Therefore, resource collision may occur.
In this embodiment of this application, the SL transmission resource includes an initial SL transmission resource and/or a retransmission resource. A unified description is provided herein. Details are not described below.

Fifth: A V2X communication resource pool

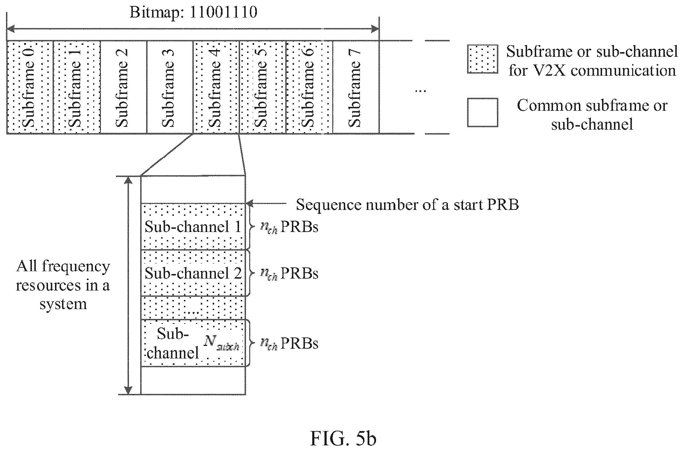

A time-frequency resource required for V2X communication may be configured based on the V2X communication resource pool. The V2X communication resource pool may be considered as a set including a time domain resource and a frequency domain resource for V2X communication.
For the time domain resource used for V2X communication, the base station uses one bit map, and periodically repeats the bit map to indicate a set of subframes that are in all subframes in a communication system and that are used for V2X communication. For example, as shown in FIG. 4, a length of the bit map is 8 bits, and the bit map is periodically repeated in N subframes. A number of symbols occupied by SL transmission in each subframe is fixed $M$, and M may be considered as time domain transmission duration or a time domain transmission unit of one SL transmission. For example, a value of the bitmap in FIG. 5a may be "11001110", where "1" represents a subframe used for V2X communication, and "0" represents a common subframe. Subframe 0 to subframe 7 are used as an example. When the value of the bitmap is "11001110", it indicates that the subframe 0, the subframe 1, the subframe 4, the subframe 5, or the subframe 6 may be used for V2X communication, and the rest subframe 2, subframe 3, or subframe 7 is a common subframe and cannot be used for V2X communication.
For the frequency domain resource used for V2V communication, the base station may divide the frequency domain resource for V2V communication into several sub-channels, and each sub-channel may include a fixed number of physical resource blocks (physical resource blocks, PRBs). For example, FIG. 5b may be obtained by expanding the subframe 4 in FIG. 5a in frequency domain. A frequency resource used for V2X communication belongs to the V2X communication resource pool, the V2X communication resource pool has $N_{subch}$ sub-channels in total, and each sub-channel includes $n_{ch}$ PRBs. In this embodiment of this application, a sequence number of a start PRB of the frequency resource used for V2X communication may be indicated by the base station. Because a granularity for scheduling the frequency resource in the V2X communication resource pool may be a sub-channel, one SL transmission may occupy one or more sub-channels.

Sixth: Hybrid automatic repeat request-acknowledgement (hybrid automatic repeat request-acknowledgement, HARQ-ACK) feedback

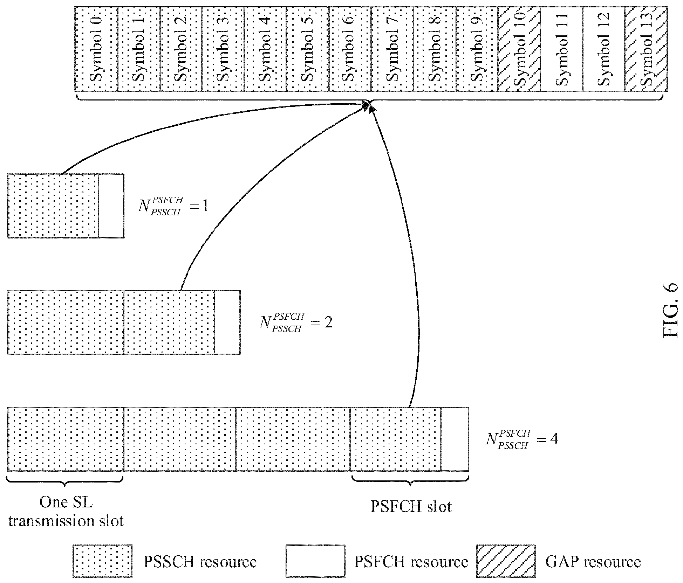

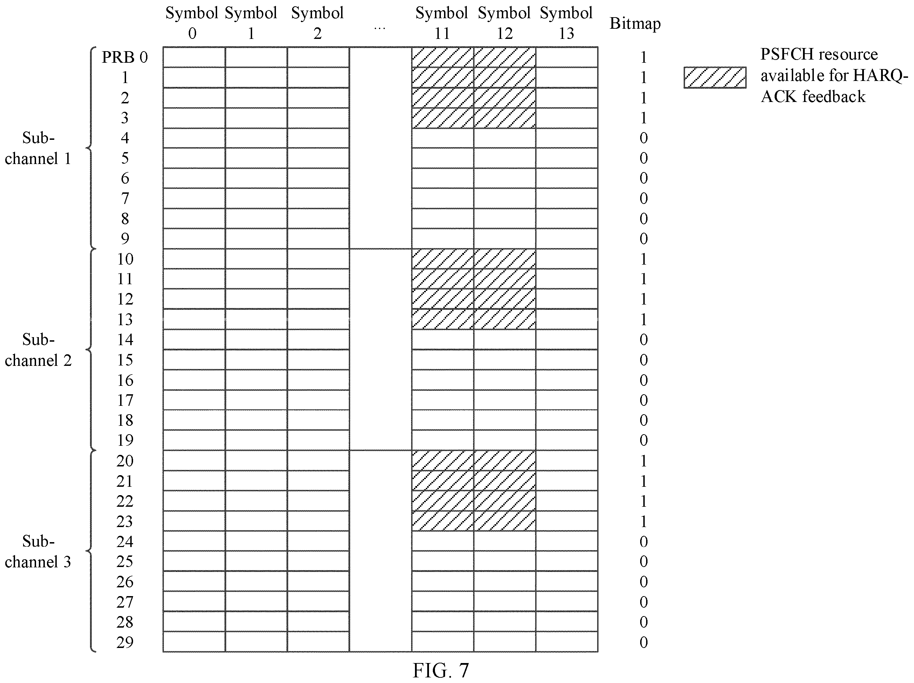

In a new radio (new radio, NR) system in the fifth generation (the fifth generation, 5G) mobile communication system, V2X communication supports physical layer HARQ-ACK feedback. That is, for one PSSCH and PSCCH transmission, if the transmit end UE carries HARQ-ACK feedback enabling information in SCI included in a PSCCH, the receive end UE needs to feed back corresponding acknowledgment/negative acknowledgment (acknowledgement/-negative acknowledgement, ACK/NACK) information based on a decoding result of a PSSCH this time. The ACK/NACK information is transmitted by using a physical sidelink feedback channel (physical sidelink feedback channel, PSFCH).
In the NR system, the V2X communication resource pool configures periodic time domain resources for a PSFCH resource, and a value of a period configuration parameter $N_{PSSCH}^{PSFCH}$ for the PSFCH resource may be 0, 1, 2, or 4. $N_{PSSCH}^{PSFCH} = 0$ indicates that there is no PSFCH resource configuration in the communication resource pool, that is, a resource in the communication resource pool is unavailable for sending a PSFCH, that is, the communication system does not support the physical layer HARQ-ACK feedback. $N_{PSSCH}^{PSFCH} = 1, 2, 4$ indicates that every $N_{PSSCH}^{PSFCH}$ SL transmission slots include one PSFCH slot. FIG. 6 shows PSFCH resource configuration in one period. When $N_{PSSCH}^{PSFCH} = 1$, each SL transmission slot includes one PSFCH slot. When $N_{PSSCH}^{PSFCH} = 2$, every two SL transmission slots include one PSFCH slot. When $N_{PSSCH}^{PSFCH} = 4$, every four SL transmission slots include one PSFCH slot. As shown in FIG. 6, in a slot in which a PSFCH resource is located, the last two orthogonal frequency division multiplexing (orthogonal frequency division multiplexing, OFDM) symbols before a gap (GAP) is occupied by a PSFCH slot.
In a scenario of the transmission mode 2 of V2X communication, the UE needs to autonomously select an SL transmission resource based on a sensing result of the UE. Therefore, a PSFCH resource is configured in frequency domain for each sub-channel in the V2X communication resource pool of the NR system, to simplify a PSFCH resource selection process. Specifically, a process of determining a PSFCH resource corresponding to each sub-channel includes the following steps.
First, a bit map of a PSFCH frequency domain resource is configured.
Specifically, the bit map of the PSFCH frequency domain resource is configured in the V2X communication resource pool. The bit map indicates whether each PRB in the frequency domain resource in the V2X communication resource pool is a PSFCH resource available for the HARQ-ACK feedback. In other words, a length of bit information included in the bit map is equal to a number of PRBs in the communication resource pool. "1" in the bit map indicates that a corresponding PRB is a PSFCH resource available for the HARQ-ACK feedback. On the contrary, "0" in the bit map indicates that a corresponding PRB is not a PSFCH resource. For example, it is assumed that the V2X communication resource pool has three sub-channels in total, and each sub-channel includes 10 PRBs, that is, $N_{subch} = 3$ and $n_{ch} = 10$. FIG. 7 can be obtained by expanding one SL transmission slot including a PSFCH slot in FIG. 6 in time domain and frequency domain. The bit map of the PSFCH frequency domain resource includes 3 x 10=30 bits in total, that is, a length of bit information included in the bit map is 30, and each bit indicates whether a corresponding PRB is available for sending an ACK/NACK signal. In the schematic diagram of PSFCH resource configuration shown in FIG. 7, the bit map indicates that the first four PRBs of each sub-channel are available for sending the ACK/NACK signal on a PSFCH.
Then, a number of PRBs of a PSFCH resource corresponding to each sub-channel is determined.

Because every $N_{PSSCH}^{PSFCH}$ SL transmission slots include one PSFCH slot, for a V2X communication resource pool including $N_{subch}$ sub-channels, a number of PRBs of a PSFCH resource corresponding to each sub-channel meets the following formula (1):

$$M_{subch,slot}^{PSFCH} = M_{PRB,set}^{PSFCH} / (N_{subch} \cdot N_{PSSCH}^{PSFCH}) \text{; Formula (1)}$$

$M_{PRB,set}^{PSFCH}$ represents a number of PRBs of a frequency domain resource available for PSFCH sending, that is, a total number of bits whose values each are "1" in the bit map of the PSFCH frequency domain resource. FIG. 7 is used as an example. In a bit map with a length of 30, there are 12 bits with values of "1" in total. Therefore, a value of $M_{PRB,set}^{PSFCH}$ is 12, and a number of sub-channels $N_{subch}$ is 3. It is assumed that a value of a period configuration parameter $N_{PSSCH}^{PSFCH}$ is 4, and a value of $M_{subch,slot}^{PSFCH}$ obtained through calculation is 1. That is, the V2X communication resource pool configures a PSFCH resource of one PRB for each sub-channel in each SL transmission slot.

Then, a slot in which the PSFCH resource available for the HARQ-ACK feedback is specifically located is determined based on a minimum time gap $K$.

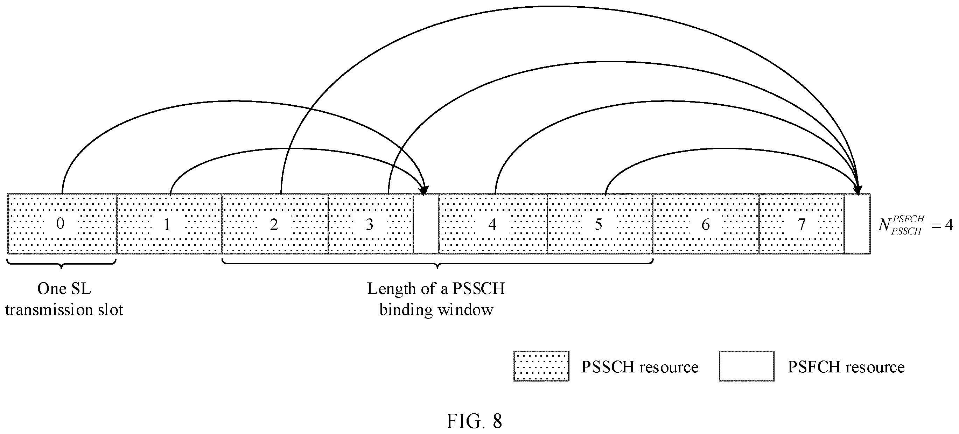

Due to a limitation of a decoding capability of the receive end UE, the receive end UE cannot immediately perform feedback after receiving a PSSCH. Therefore, the minimum time gap K may be defined, and a value of the minimum time gap is configured by the V2X communication resource pool. That is, the PSFCH is sent in a first available slot that includes a PSFCH resource, and the slot is located at least at a gap of K slots from a slot in which the PSSCH is located. A case in which $N_{PSSCH}^{PSFCH} = 4$ in FIG. 6 is used as an example. As shown in FIG. 8, when K=2, a PSSCH carried in an SL transmission slot 0 or an SL transmission slot 1 may be fed back on a PSFCH resource in an SL transmission slot 3. APSSCH carried in an SL transmission slot 2, an SL transmission slot 3, an SL transmission slot 4, or an SL transmission slot 5 may be fed back on a PSFCH resource in an SL transmission slot 7. Because the PSSCH carried in the slot 2, the slot 3, the slot 4, or the slot 5 may be fed back on a PSFCH resource in a same slot, the SL transmission slot 2, the SL transmission slot 3, the SL transmission slot 4, and the SL transmission slot 5 may be referred to as a PSSCH binding window.

Finally, a PSFCH resource in one PSFCH slot is sequentially allocated to each sub-channel in the PSSCH binding window in a manner of time domain first and then frequency domain.

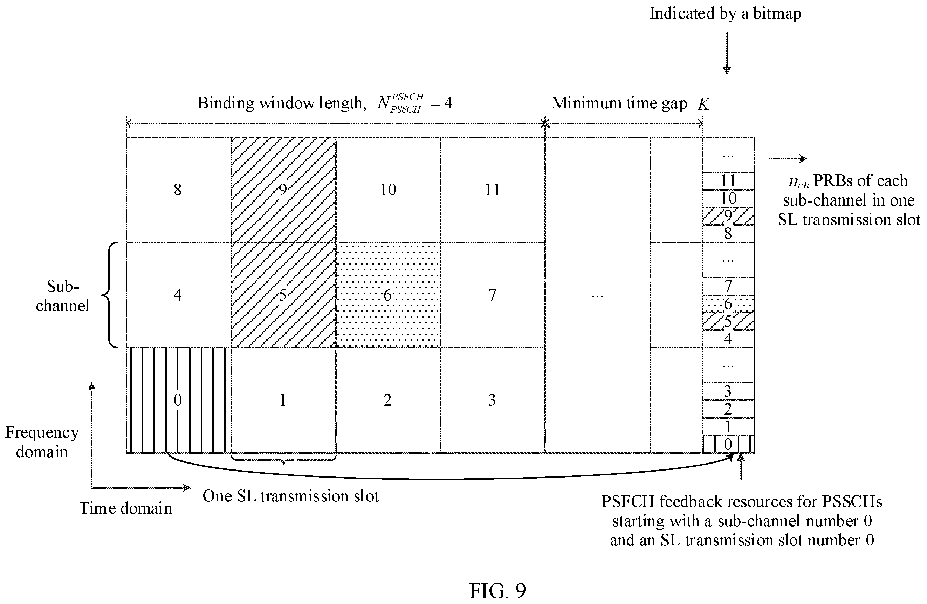

For example, with reference to FIG. 7 and FIG. 8, as shown in FIG. 9, when $N_{PSSCH}^{PSFCH} = 4$., a PSFCH resource corresponding to each sub-channel in the four bound PSSCH slots is shown by numbers 0 to 11 in the figure. In other words, the V2X communication resource pool allocates a PSFCH resource of one PRB to each sub-channel in each SL transmission slot. For example, a PSSCH numbered 0 may be fed back on a PSFCH resource also numbered 0, and a PSSCH numbered 6 may be fed back on a PSFCH resource also numbered 6. The PSFCH resource of the PSSCH is started with a sub-channel number 0 and an SL transmission slot number 0, and is indicated by a bitmap. It is expressed by using a formula. For an $i^{th}$ SL transmission slot in the bound PSSCH slots, if a number of a sub-channel in the V2X communication resource pool in the SL transmission slot is $j$, a PSFCH resource set corresponding to the sub-channel $j$ in the SL transmission slot is:

$$[(i + j \cdot N_{PSSCH}^{PSFCH}) \cdot M_{subch,slot}^{PSFCH}, (i + 1 + j \cdot N_{PSSCH}^{PSFCH}) \cdot M_{subch,slot}^{PSFCH} - 1]$$, where $0 \leq i \leq N_{PSSCH}^{PSFCH}$ and $0 \leq j < N_{subch}$. It can be learned from FIG. 9 that, if a transmit end UE-B occupies two sub-channels to send PSSCHs, for example, a PSSCH numbered 5 and a PSSCH numbered 9, PSFCH resources corresponding to the PSFCHs are also numbered 5 and 9, and the PSFCH resources are not continuous in frequency domain.

Seventh: A service scenario supporting the PSFCH feedback

In the NR system, V2X communication supports unicast, multicast, and broadcast. The multicast includes two scenarios: multicast 1 and multicast 2. Physical-layer HARQ-ACK feedback is supported in unicast and multicast scenarios.

In the unicast scenario, one transmit end UE and one receive end UE may form a unicast connection pair. When the HARQ-ACK feedback is enabled on a unicast link, in a case in which the receive end UE can correctly decode a PSCCH corresponding to a PSSCH, if the PSSCH is correctly decoded, the receive end UE feeds back, to the transmit end UE, a PSFCH sequence that carries ACK information. If the PSSCH is incorrectly decoded, the receive end UE feeds back, to the transmit end UE, the PSFCH sequence that carries the NACK information.

In a scenario of multicast 1 (NACK-only), when the HARQ-ACK feedback is enabled on a multicast link, in a case in which an intra-group receive end UE can correctly decode a PSCCH corresponding to a PSSCH, if the PSSCH is incorrectly decoded, the receive end UE feeds back, to the transmit end UE, a PSFCH sequence that carries NACK information. If the PSSCH is correctly decoded, the receive end UE does not feed back any information to the transmit end UE.

In a scenario of multicast 2 (NACK/ACK), when the HARQ-ACK feedback is enabled on a multicast link, in a case in which an intra-group receive end UE can correctly decode a PSCCH corresponding to a PSSCH, if the PSSCH is correctly decoded, the receive end UE feeds back, to the transmit end UE, a PSFCH sequence that carries ACK information. If the PSSCH is incorrectly decoded, the receive end UE feeds back, to the transmit end UE, a PSFCH sequence that carries NACK information.

Eighth: Generation of a PSFCH sequence

The PSFCH sequence may be generated based on a ZC sequence with a low peak-to-average ratio. The PSFCH sequence occupies two continuous orthogonal OFDM symbols in time domain, and may be one PRB in frequency domain. Specifically, the PSFCH sequence is generated in the following manner.

First, a basic sequence $r(n)$ may be generated based on a sequence length, where $0 \leq n \leq M_{ZC}$. Then, phase rotation is performed on the basic sequence $r(n)$ to obtain a multiplexable low peak-to-average ratio sequence, where the low peak-to-average ratio sequence meets the following formula (2):

$$r^{\alpha_l}(n) = r(n) * e^{j\alpha_l n}, \quad 0 \leq n < M_{ZC} ; \text{Formula (2)}$$

$M_{ZC} = 12$, $l$ represents a number of an OFDM symbol in a PSFCH transmission slot, for example, $l = 0$ represents a first OFDM symbol in a current PSFCH transmission slot, and $\alpha_l$ represents a phase rotation value. That is, a plurality of users may use different phase rotation values $\alpha_l$ to generate different PSFCH sequences, and each PSFCH sequence may be code-division multiplexed on one PRB for sending. Because the receive end UE needs to feed back the ACK/NACK information, at least two sequences corresponding to different values $\alpha_l$ need to be allocated to each user. The phase rotation value $\alpha_l$ may meet the following formula (3):

$$\alpha_l = \frac{2\pi}{N_{sc}^{PRB}} \left( \left( m_0 + m_{cs} + n_{cs}(n_{s,f}^{\mu}, l + l') \right) \bmod N_{sc}^{PRB} \right) 0 \leq n < M_{ZC} ; \text{Formula (3)}$$

$N_{sc}^{PRB}$ represents a number of sub-carriers in one PRB, and in the NR system, a value of $N_{sc}^{PRB}$ may be 12. mod () represents modulo, $n_{s,f}^{\mu}$ represents a number of an SL transmission slot corresponding to a current sub-carrier spacing $\mu$ in a radio frame, $l'$ represents a symbol index relative to the first OFDM symbol in the current PSFCH transmission slot, $m_0$ represents a phase of ACK in a PSFCH resource pair, and $m_{cs}$ represents a phase offset of a NACK sequence relative to an ACK sequence in a PSFCH resource pair. A feedback resource pair may be available for the HARQ-ACK. One sequence may be used for ACK feedback, and the other sequence may be used for NACK feedback. As described above, in the NR system, V2X communication supports physical layer HARQ-ACK feedback in the unicast and multicast scenarios. For different service types, a value of $m_{cs}$ may be determined based on Table 1 and Table 2. Table 1 is a phase mapping relationship of a PSFCH resource pair in the unicast scenario and the scenario of multicast 2. Table 2 is a phase mapping relationship of a PSFCH resource pair when there is a scheduling request (scheduling request, SR) for a format 0 (format 0) of a physical uplink control channel (physical uplink control channel, PUCCH) in the scenario of multicast 1.

**Table 1**

| HARQ-ACK value | 0 | 1 |
|---|---|---|
| Sequence cyclic shift | $m_{cs} = 0$ | $m_{cs} = 6$ |

**Table 2**

| HARQ-ACK value | 0 | 1 |
|---|---|---|
| Sequence cyclic shift | $m_{cs} = 0$ | N/A |

A function $n_{cs}(n_{s,f}^{\mu}, l)$ may satisfy the following formula (4):

$$n_{cs}(n_{s,f}^{\mu},l) = \sum_{m=0}^{7} 2^m c(8N_{symb}^{slot} n_{s,f}^{\mu} + 8l + m), \text{ Formula (4)}$$

$N_{symb}^{slot}$ represents a number of continuous time domain symbols in one SL transmission slot. In the NR system, a value of $N_{symb}^{slot}$ may be 14, m is an integer whose value ranges from 0 to 7, and $c(i)$ represents a numerical value of a sequence number $i$ in a pseudo-random sequence. An initial value for generating the pseudo-random sequence is $c_{init} = n_{ID}$, and $n_{ID}$ is configured by a higher layer. If no $n_{ID}$ is configured by the higher layer, $n_{ID} = 0$,

A pseudo-random sequence $c(n)$ whose length is $M_{PN}$ may be generated by cyclic shift of a gold sequence whose length is 31, $n = 0, 1, ...,M_{PN}$ -1, where the gold sequence is two m sequences, namely, $x_1(n)$ and $x_2(n)$. A generation process of $c(n)$ is as follows:

$$c(n) = \left(x_1\left(n+N_c\right)+x_2\left(n+N_c\right)\right)\bmod 2$$

$$x_1\left(k+31\right)=\left(x_1\left(k+3\right)+x_1\left(k\right)\right)\bmod 2 \quad ,$$

where

$$x_2\left(k+31\right)=\left(x_2\left(k+3\right)+x_2\left(k+2\right)+x_2\left(k+1\right)+x_2\left(k\right)\right)\bmod 2$$

$$N_c = 1600, \quad x_1\left(0\right)=1, \quad x_1\left(n\right)=0, \quad n=1, 2, ..., 30,$$

and $x_2(n)$ may be determined by using $c_{init} = \sum_{i=0}^{30} x_2(i)\cdot 2^i$ .

Ninth: A PSFCH resource location

If one PSSCH occupies $N_{subch}^{PSSCH}$ sub-channels, the PSSCH corresponds to $N_{subch}^{PSSCH} \cdot M_{subch,slot}^{PSFCH} \cdot N_{CS}^{PSFCH}$ PSFCH resource pairs, where $N_{CS}^{PSFCH}$ represents a number of PSFCH sequence pairs that can be multiplexed on a PSFCH resource of one PRB configured in the V2X communication resource pool. As described above, $M_{subch,slot}^{PSFCH}$ represents a number of PRBs of a PSFCH resource allocated to each sub-channel in the V2X communication resource pool. In addition, the V2X communication resource pool may further limit, through configuration of $N_{type}^{PSFCH}$ , a PSFCH resource that is available by a receive end UE that receives a PSSCH. There are the following two solutions.

If $N_{type}^{PSFCH} = 1$ is configured by the V2X communication resource pool, the receive end UE that receives the PSSCH may use only a PSFCH resource corresponding to a first sub-channel occupied by the PSSCH, and a number of PSFCH resource pairs corresponding to the PSSCH is $R_{PRB,CS}^{PSFCH} = M_{subch,slot}^{PSFCH} \cdot N_{CS}^{PSFCH}$ . For example, as shown in FIG. 9, when the PSSCH occupies two sub-channels numbered 5 and 9 to transmit data, the receive end UE that receives the PSSCH can only use the PSFCH resource numbered 5 to perform feedback.

If $N_{type}^{PSFCH} = N_{subch}^{PSSCH}$ is configured by the V2X communication resource pool, the receive end UE that receives the PSSCH may use PSFCH resources corresponding to all sub-channels occupied by the PSSCH, and a number of PSFCH resource pairs corresponding to the PSSCH is $R_{PRB,CS}^{PSFCH} = N_{subch}^{PSSCH} \cdot M_{subch,slot}^{PSFCH} \cdot N_{CS}^{PSFCH}$ . For example, as shown in FIG. 9, when the PSSCH occupies the two sub-channels numbered 5 and 9 to transmit data, the receive end UE that receives the PSSCH may use the PSFCH resources numbered 5 and 9 to perform feedback.

The receive end UE selects a resource corresponding to a $\left(P_{ID} + M_{ID}\right)\bmod R_{PRB,CS}^{PSFCH}$ th PSFCH resource

pair to feed back a PSFCH, where $P_{ID}$ represents a physical layer source address ID carried in the SCI. For multicast 2, $M_{ID}$ represents an ID configured for current PSSCH transmission by a higher layer of each receive end UE, and for multicast 1 or unicast, $M_{ID} = 0$. $R_{PRB,CS}^{PSFCH}$ PSFCH resource pairs may arrange all PSFCH sequences in ascending order in which a frequency domain index is followed by a code domain index. That is, a PRB index of the PSFCH resource pair is

$$\left(\left(P_{ID} + M_{ID}\right) \bmod R_{PRB,CS}^{PSFCH}\right) \bmod \left(R_{PRB,CS}^{PSFCH} / \left(N_{CS}^{PSFCH} \cdot N_{type}^{PSFCH}\right)\right)$$ . In the PRB, $m_0$ of the PSFCH resource pair is determined by using $N_{CS}^{PSFCH}$ and a cyclic shift index

$$\left\lfloor \left(\left(P_{ID} + M_{ID}\right) \bmod R_{PRB,CS}^{PSFCH}\right) / \left(R_{PRB,CS}^{PSFCH} / \left(N_{CS}^{PSFCH} \cdot N_{type}^{PSFCH}\right)\right) \right\rfloor$$ together, indicating rounding down. A $m_0$ value

of a PSFCH resource pair in one PRB is shown in Table 3.

## Table 3

| $m_0$ Cyclic shift index $N_{CS}^{PSFCH}$ | 0 | 1 | 2 | 3 | 4 | 5 |
|---|---|---|---|---|---|---|
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

It can be learned from the foregoing analysis that, for multicast 2, each intra-group UE uses a different PSFCH resource to perform feedback due to a different $M_{ID}$. Correspondingly, on a premise that each intra-group UE knows $M_{ID}$ of another intra-group UE, the transmit end UE may also separately receives each resource pair. For multicast 1, because $M_{ID} = 0$, for PSSCHs with a same source address $P_{ID}$, each intra-group UE uses a same PSFCH to feed back NACK information.

Tenth: A selection process of an SL transmission resource

This part mainly describes a process in which the transmit end UE selects the SL transmission resource in the transmission mode 2 of V2X communication in the NR system.

SL transmission supports reservation of the SL transmission resource, that is, SCI sent by the transmit end UE carries SL transmission resource reservation information in a future period of time. After receiving the SL transmission resource reservation information of the SCI, another UE excludes the reserved SL transmission resource, thereby avoiding resource collision. The SCI includes the SL transmission resource reservation information, priority information of data sent by a PSSCH this time, a source address ID, a destination address ID, and the like that are sent by the PSSCH this time.

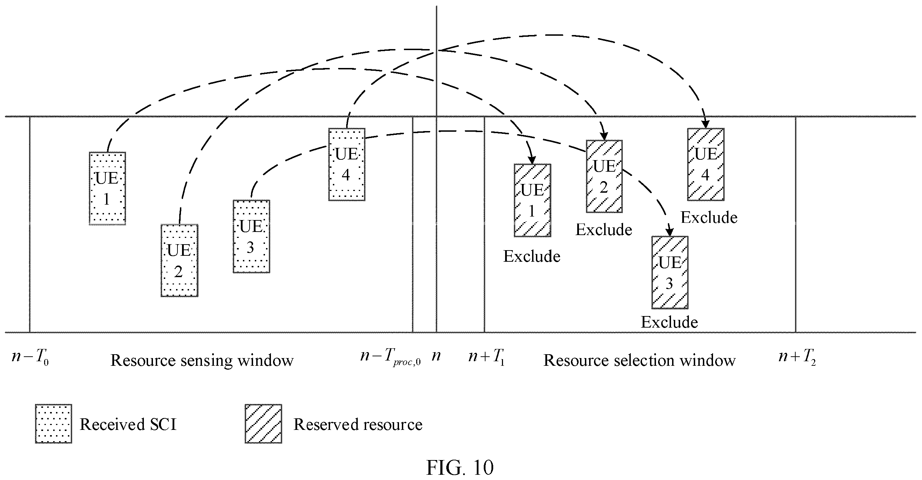

As shown in FIG. 10, the transmit end UE triggers selection of an SL transmission resource in a slot $n$, that is, in the slot $n$, the transmit end UE has data to be sent to the receive end UE. A resource sensing window may be a slot that is before the slot $n$ and that corresponds to $[n - T_0, n - T_{proc,0}]$, or a resource selection window may be a slot that is after the slot $n$ and that corresponds to $[n + T_1, n + T_2]$, where $T_0$, $T_{proc,0}$, $T_1$ and $T_2$ are all parameters configured by a higher layer. The transmit end UE senses, in the resource sensing window, SCI sent by another UE in a frequency domain resource pool, then excludes a corresponding candidate resource from the resource selection window based on a sensing result, and finally selects an SL transmission resource of the UE from remaining resources, to send to-be-sent data to the receive end UE by using the SL transmission resource. For example, if the transmit end UE obtains, in the resource sensing window, SCI sent by a UE 1, a UE 2, a UE 3, and a UE 4 through sensing, and reference signal received power (reference signal received power, RSRP) measurement results of resources that are reserved by the UE 1, the UE 2, the UE 3, and UE 4, and that are located in the resource selection window are greater than a threshold $Th_{prioTX,prioRX}$, the resources reserved by the UE 1, the UE 2, the UE 3, and UE 4 are excluded by the transmit end UE from the resource selection window. Specifically, a specific process in which the transmit end UE selects the SL transmission resource is as follows:

Step 1: The resource selection window may be defined as a slot that is after the trigger slot $n$ selected by the SL transmission resource and that corresponds to $[n + T_1, n + T_2]$.

It is assumed that a frequency resource in a V2X resource pool has a total of $N_{subch}$ sub-channels, a corresponding sub-channel set is $S = \{S_0, S_1, ..., S_{N_{subch}-1}\}$. A candidate SL transmission resource $R_{x,y}$ may be defined as an SL transmission slot $t_y^{SL}$ that is located in the resource selection window $[n + T_1, n + T_2]$ in time domain and belongs to the V2X resource pool, and a sub-channel set that is located on a sub-channel $x + j$ in frequency domain, where $j = 0, ..., L_{subch}$ - 1. That is, the candidate SL transmission resource $R_{x,y}$ is represented as a set of continuous sub-channels with lengths equal to $L_{subch}$ in frequency domain, and $L_{subch}$ is a number of sub-channels occupied by a to-be-transmitted PSSCH/PSCCH. Therefore, a total number of candidate resources in each SL transmission slot is $N_{subch} - L_{subch} + 1$. Any set of continuous sub-channels that meet the foregoing conditions and whose lengths are equal to $L_{subch}$ may be considered as a candidate SL transmission resource $R_{x,y}$, and a number of all candidate SL transmission resources is $M_{total}$.

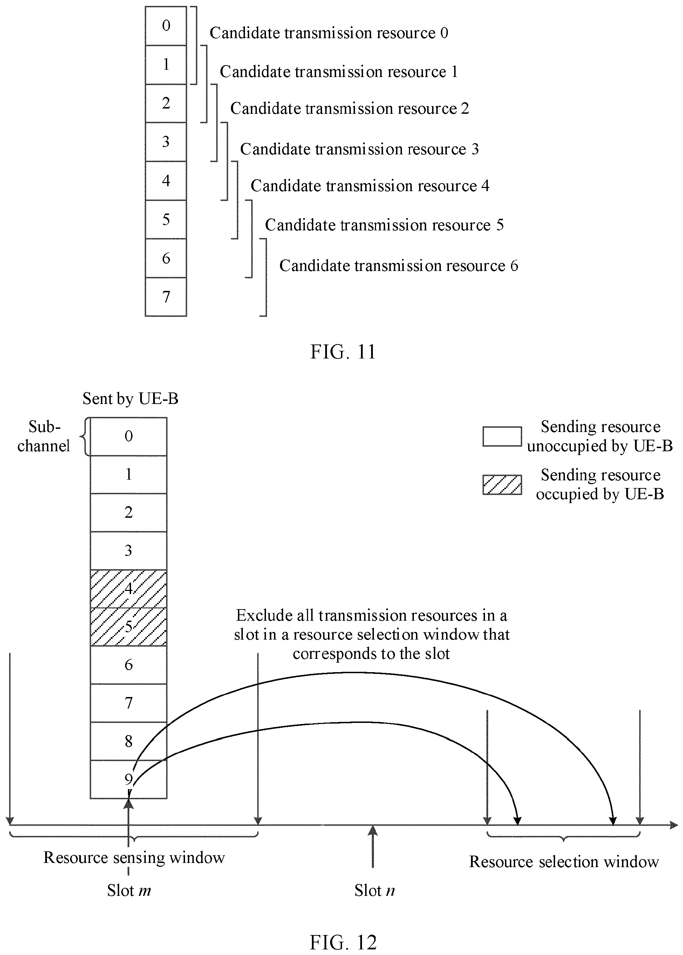

As shown in FIG. 11, if a number of sub-channels $N_{subch}$ included in the frequency resource of the V2X resource pool is 8, a corresponding sub-channel set is $S = \{S_0, S_1, ..., S_7\}$, and a number of sub-channels $L_{subch}$ occupied by the to-be-transmitted PSSCH/PSCCH is 2. In this case, a total number of candidate SL transmission resources in each SL transmission slot is $N_{subch} - L_{subch} + 1 = 7$.

Step 2: The resource sensing window may be defined as a slot that is before the trigger slot $n$ selected by the SL transmission resource and that corresponds to $[n - T_0, n - T_{proc,0}]$.

$T_0$ may be configured by a high-layer parameter t0_SensingWindow, and $T_{proc,0}$ may be determined by using Table 4. A value of $\mu_{SL}$ is related to a sub-carrier spacing (sub-carrier spacing, SCS) $\Delta f$ corresponding to an SL transmission bandwidth part (bandwidth part, BWP), as shown in Table 5.

**Table 4**

| $\mu_{SL}$ | $T_{proc,0}$ (Unit: slot) |
|---|---|
| 0 | 1 |
| 1 | 1 |
| 2 | 2 |
| 3 | 4 |

Table 5

| $\mu_{SL}$ | $\Delta f = 2^{\mu_{SL}} \cdot 15$ (Unit: kilohertz, kHz) |
|---|---|
| 0 | 15 |
| 1 | 30 |
| 2 | 60 |
| 3 | 120 |
| 4 | 240 |

Step 3: The threshold $Th_{prioTx,prioRX}$ may be defined as a function of a priority corresponding to data indicated in the SCI received by the transmit end UE and a priority corresponding to to-be-sent data of the transmit end UE.

Step 4: A set including all $M_{total}$ candidate SL transmission resources may be defined as $S_A$.

Step 5: A candidate resource $R_{x,y}$ may be excluded from the set $S_A$ if the candidate resource $R_{x,y}$ meets all the following conditions:

    (1) The transmit end UE has no sensing slot, that is, the transmit end UE has sent a PSSCH/PSCCH in the SL transmission slot.

In the resource sensing window, the transmit end UE may also send data. Because an SL transmission system is half-duplex, that is, the UE can only be in a sending state or a receiving state, the transmit end UE cannot perform sensing by receiving a signal sent by another UE when being in the sending state. In this case, the V2X communication resource pool considers that SCI sent by the another UE in the slot includes all possible service periods, and reserves a periodic SL transmission resource. Therefore, the transmit end UE first excludes all candidate SL transmission resources $R_{x,y}$ in a slot corresponding to a sending slot of the PSSCH/PSCCH of the transmit end UE in the SL transmission resource selection window, to exclude all SL transmission resources that may cause a collision.

As shown in FIG. 12, UE-B sends a PSSCH/PSCCH in a slot $m$, that is, a sending slot of the PSSCH/PSCCH of the transmit end UE is $m$: The PSSCH/PSCCH occupies a sub-channel 4 and a sub-channel 5 in frequency domain. If the slot $m$ is located in the resource sensing window, even if no UE other than the UE-B sends information in the slot $m$, when the UE-B subsequently selects an SL transmission resource, all SL transmission resources in a slot corresponding to the slot $m$ in the resource selection window need to be excluded, including sub-channel 0 to sub-channel 9.

(2) An integer $j$ meeting $y + j \times P'_{rsvp\_TX} = m + q \times P'_{rsvp\_RX}$ exists.

$q = 1, 2, ..., Q$ and $j = 0, 1, ..., C_{resel} - 1$, where $C_{resel}$ represents a number of reservation times of the periodic SL transmission resource that is reserved by the transmit end UE and that is configured by the higher layer. $P'_{rsvp\_TX}$ represents a logical period corresponding to a physical period $P_{rsvp\_TX}$ of the transmit end UE, and $P'_{rsvp\_RX}$ represents a logical period corresponding to a physical period $P_{rsvp\_RX}$ indicated by the received SCI. If $P_{rsvp\_RX} < T_{scal}$, and

$$n' - m \le P'_{rsvp\_RX}, \quad Q = \left| \frac{T_{scal}}{P_{rsvp\_RX}} \right|$$

, otherwise, $Q = 1$, where $T_{scal}$ is a gap corresponding to a parameter $T_2$ of the resource selection window, and $T_{scal}$ is in a unit of ms, where $n'$ may be obtained in the following manner: If the slot $n$ belongs to the V2X communication resource pool, $t_{n'}^{SL} = n$. If the slot $n$ does not belong to the V2X communication resource pool, $t_{n'}^{SL}$ is a first slot that belongs to the V2X communication resource pool and that is after the slot $n$, where $\left( t_0^{SL}, t_1^{SL}, t_2^{SL}, ..., t_{MAX}^{SL} \right)$ may be defined as a set of SL transmission slots belonging to the V2X communication resource pool.

In the foregoing process, $P_{rsvp\_TX}$ represents a reservation period of the transmission resource of the transmit end UE, $P_{rsvp\_TX}$ may be in a unit of millisecond ms, and a value of $P_{rsvp\_TX}$ may be provided by a higher layer parameter. In other words, $P_{rsvp\_TX}$ represents a physical period, and may include a slot in a non-V2X communication resource pool. $P'_{rsvp\_TX}$ represents a logical period corresponding to the physical period $P_{rsvp\_TX}$, that is, $P'_{rsvp\_TX}$ includes only a slot that belongs to the V2X communication resource pool. Similarly, $P_{rsvp\_RX}$ represents a resource reservation period that is of another UE and that is obtained by the transmit end UE through sensing, $P_{svp\_RX}$ may be in a unit of ms, and a value of $P_{rsvp\_RX}$ may be provided by a resource reservation period (resource reservation period) parameter in the SCI received by the transmit end UE, that is, $P_{rsvp\_RX}$ represents a physical period, and may include a slot in a non-V2X communication resource pool. $P'_{rsvp\_RX}$ represents a logical period corresponding to the physical period $P_{rsvp\_RX}$, that is, $P'_{rsvp\_RX}$ includes only a slot that belongs to the V2X communication resource pool. A conversion relationship between the physical period $P_{rsvp}$ and the logical period $P'_{rsvp}$ is as follows:

$$P'_{rsvp} = \left\lceil \frac{N}{20ms} \times P_{rsvp} \right\rceil$$

$P_{rsvp}$ represents $P_{rsvp\_TX}$ or $P_{rsvp\_RX}$, and $P'_{rsvp}$ represents $P'_{rsvp\_TX}$ or $P'_{rsvp\_RX}$. In slot configuration of the NR system, a slot configuration format is repeated in a unit of 20 ms. A period of one slot configuration is P ms, and is provided by a parameter, namely, an uplink-downlink transmission periodicity DL-UL-TransmissionPeriodicity in time division multiplexing uplink-downlink common configuration tdd-UL-DL-ConfigurationCommon higher layer signaling. N represents a number of slots that are available for SL transmission and that are included within 20 ms in a specific uplink-downlink slot configuration.

Step 6: The candidate resource $R_{x,y}$ may be excluded from the set $S_A$ if the candidate resource meets all the following conditions:

(1) The transmit end UE receives, in a sensing slot $t_m^{SL}$, SCI sent by another UE, and when a resource reservation period (resource reservation period) parameter exists, if it is estimated that a time-frequency resource determined by using the SCI received by the transmit end UE in the slot $t_{m+q \times P'_{rsvp\_RX}}^{SL}$ overlaps a candidate resource $R_{x,y+j \times P'_{rsvp\_TX}}$, the candidate resource $R_{x,y+j \times P'_{rsvp\_TX}}$ may be excluded from the set $S_A$, where meanings indicated by $P'_{rsvp\_TX}$, $P'_{rsvp\_RX}$, $q$ and $j$ are the same as meanings indicated by corresponding parameters in Step 5. Details are not described herein again.

(2) The transmit end UE receives, in the sensing slot $t_m^{SL}$, SCI sent by another UE, and then obtains $prio_{RX}$ through decoding. When a resource reservation period (resource reservation period) parameter exists, $P_{rsvp\_RX}$ is decoded from the SCI, where $prio_{RX}$ represents a priority of data indicated in the SCI. If an RSRP measurement result of the candidate resource determined by using the SCI is greater than the threshold $Th_{prioTX,prioRX}$, the candidate resource may be excluded from the resource selection window. The threshold $Th_{prioTx,prioRX}$ is a function of a priority of data indicated in the SCI received by the transmit end UE and a priority of to-be-sent data of the transmit end UE.

Step 7: If a number of remaining candidate resources in the candidate resource set $S_A$ is less than X% of $M_{total}$, a preset RSRP threshold is increased by 3 dB, and then Step 1 to Step 4 are repeated, where a value of X may be 20, 35, or 50.

Step 8: The transmit end UE reports the candidate resource set $S_A$ to the higher layer, and the higher layer completes final resource selection from the set $S_A$.

The following describes the technical solutions in embodiments of this application with reference to the accompanying drawings in embodiments of this application. In descriptions of this application, "/" represents an "or" relationship between associated objects unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists, where A and B may be singular or plural. In addition, in descriptions of this application, unless otherwise specified, "a plurality of" means two or more than two. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

Embodiments of this application are applicable to an LTE system or an NR system, or are applicable to another future-oriented new system, or the like. This is not specifically limited in embodiments of this application. In addition, the terms "system" and "network" are interchangeable.

FIG. 13 is a communication system 130 according to an embodiment of this application. The communication system 130 includes a first terminal apparatus 1301 and a second terminal apparatus 1302. The first terminal apparatus 1301 is configured to determine coordination information, and send the coordination information to the second terminal apparatus 1302. The second terminal apparatus 1302 is configured to receive the coordination information from the first terminal apparatus 1301, and determine a sidelink sending resource based on the coordination information. A sequence carrying the coordination information is mapped to a first time-frequency resource, the first time-frequency resource is a subset of a second time-frequency resource, and the second time-frequency resource and a physical sidelink feedback resource overlap in time domain, and are orthogonal in frequency domain. Specific implementations and technical effect of this solution are described in detail in subsequent method embodiments. Details are not described herein again.

Optionally, as shown in FIG. 13, the communication system 130 provided in this embodiment of this application may further include a network device 1303. The network device 1303 is configured to communicate with the first terminal apparatus 1301 and/or the second terminal apparatus 1302. For example, in a broadcast scenario, the first terminal apparatus 1301 or the second terminal apparatus 1302 may send related request information to the network device 1303, to ensure that another terminal apparatus with a discontinuous reception (discontinuous reception, DRX) requirement of a service can receive a broadcast signal. This is not specifically limited in this embodiment of this application.

Optionally, the network device 1303 in this embodiment of this application is a device that accesses a terminal apparatus (including the first terminal apparatus 1301 or the second terminal apparatus 1302) to a wireless network, may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a wireless-fidelity (wireless-fidelity, Wi-Fi) system, and the like, or may be a module or unit that implements some functions of the base station, for example, may be a central unit (central unit, CU), or may be a distributed unit (distributed unit, DU). A specific technology and a specific device form used by the network device are not limited in this embodiment of this application. In this application, unless otherwise specified, the network device is a radio access network device.

Optionally, the terminal apparatus (including the first terminal apparatus 1301 or the second terminal apparatus 1302) in this embodiment of this application may be a vehicle (vehicle), or may be an in-vehicle terminal installed on the vehicle to assist the vehicle in traveling, or a chip in the in-vehicle terminal. Alternatively, the terminal apparatus (including the first terminal apparatus 1301 or the second terminal apparatus 1302) in this embodiment of this application may be a device configured to implement a wireless communication function, for example, a terminal or a chip that can be used in a terminal. The in-vehicle terminal or terminal may be a UE, an access terminal, a terminal unit, a terminal station, a mobile station, a mobile console, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device or a wearable device, a virtual reality (virtual reality, VR) terminal apparatus, an augmented reality (augmented reality, AR) terminal apparatus, a wireless terminal in industrial control (industrial control) or a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal apparatus (including the first terminal apparatus 1301 or the second terminal apparatus 1302) may be located at a fixed position, or may be mobile. This is not specifically limited in this embodiment of this application.

Optionally, in this embodiment of this application, the terminal apparatus (including the first terminal apparatus 1301 or the second terminal apparatus 1302) includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the method provided in this embodiment of this application may be executed by the terminal apparatus (including the first terminal apparatus 1301 or the second terminal apparatus 1302), or a functional module that is in the terminal apparatus (including the first terminal apparatus 1301 or the second terminal apparatus 1302) and that can invoke and execute a program.

In other words, a related function of the terminal apparatus (including the first terminal apparatus 1301 or the second terminal apparatus 1302) in this embodiment of this application may be implemented by one device, or may be jointly implemented by a plurality of devices, or may be implemented by one or more functional modules in one device. This is not specifically limited in this embodiment of this application. It may be understood that the foregoing function may be a network element in a hardware device, may be a software function running on dedicated hardware, a combination of hardware and software, or a virtualization function instantiated on a platform (for example, a cloud platform).

For example, a related function of the terminal apparatus (including the first terminal apparatus 1301 or the second terminal apparatus 1302) in this embodiment of this application may be implemented by using a communication apparatus 140 in FIG. 14.

FIG. 14 is a schematic diagram of a structure of the communication apparatus 140 according to an embodiment of this application. The communication apparatus 140 includes one or more processors 141, a communication line 142, and at least one communication interface (in FIG. 14, only an example in which a communication interface 144 and one processor 141 are included is used for description). Optionally, the communication apparatus 140 may further include a memory 143.

The processor 141 may be a CPU, a microprocessor, an application-specific integrated circuit (application-specific integrated circuit, ASIC), or one or more integrated circuits for controlling program execution of the solutions of this application.

The communication line 142 may include a path, configured to connect different components.

The communication interface 144 may be a transceiver module, configured to communicate with another device or a communication network, such as the Ethernet, a RAN, or a wireless local area network (wireless local area network, WLAN). For example, the transceiver module may be an apparatus such as a transceiver or a transceiver. Optionally, the communication interface 144 may alternatively be a transceiver circuit located in the processor 141, and is configured to implement signal input and signal output of the processor.

The memory 143 may be an apparatus having a storage function. For example, the memory may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. This is not limited thereto. The memory may exist independently, and is connected to the processor through the communication line 142. The memory may alternatively be integrated with the processor.

The memory 143 is configured to store computer-executable instructions for performing the solutions in this application, and the processor 141 controls execution of the computer-executable instructions. The processor 141 is configured to execute the computer-executable instructions stored in the memory 143, to implement a communication method provided in embodiments of this application.

Alternatively, in this embodiment of this application, the processor 141 may implement a processing-related function in a communication method provided in the following embodiment of this application, and the communication interface 144 may be responsible for communicating with another device or a communication network. This is not specifically limited in this embodiment of this application.

The computer-executable instructions in this embodiment of this application may alternatively be referred to as application code. This is not specifically limited in embodiments of this application.

In specific implementation, in an embodiment, the processor 141 may include one or more CPUs, for example, a CPU 0 and a CPU 1 in FIG. 14.

In specific implementation, in an embodiment, the communication apparatus 140 may include a plurality of processors, for example, the processor 141 and a processor 147 in FIG. 14. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 140 may further include an output device 145 and an input device 146. The output device 145 communicates with the processor 141, and may display information in a plurality of manners.

The communication apparatus 140 may be a general-purpose apparatus or a dedicated apparatus. For example, the communication apparatus 140 may be a desktop computer, a portable computer, a network server, a personal digital assistant (personal digital assistant, PDA), a mobile phone, a tablet computer, a wireless terminal apparatus, an in-vehicle terminal apparatus, an embedded device, or a device having a similar structure in FIG. 14. A type of the communication apparatus 140 is not limited in this embodiment of this application.

The following describes the communication method provided in embodiments of this application in detail with reference to FIG. 1 to FIG. 14.

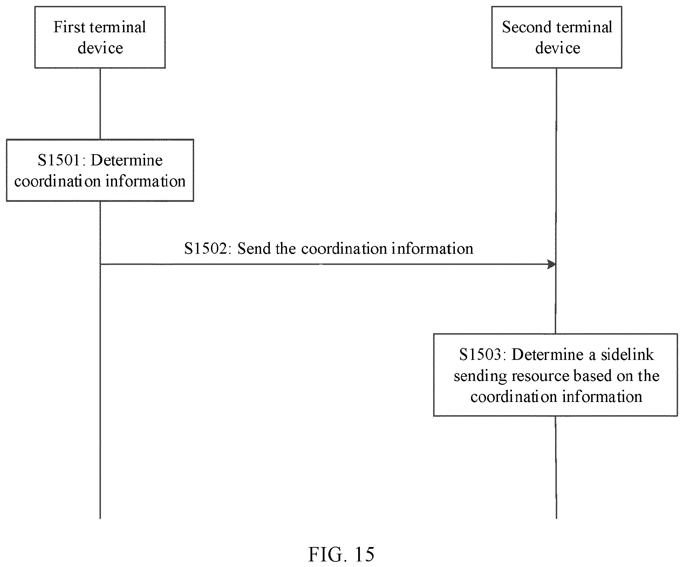

FIG. 15 shows a communication method according to an embodiment of this application. The communication method includes the following steps.

S1501: A first terminal apparatus determines coordination information. The coordination information is used to assist a second terminal apparatus in determining a sidelink sending resource.

In a possible implementation, the coordination information includes first information, the first information indicates a resource usage status in a first slot, and the second terminal apparatus sends a physical sidelink channel in the first slot. For example, in an NR system, the physical sidelink channel includes a PSSCH and/or a PSCCH.

Optionally, that the first information indicates a resource usage status in the first slot includes: The first information indicates resource usage statuses of M sub-channels in the first slot, and M is a number of sub-channels configured in a resource pool. Alternatively, the first information indicates resource usage statuses of sub-channels other than $M_1$ sub-channels in M sub-channels in the first slot, M is a number of sub-channels configured in the resource pool, and $M_1$ is a number of sub-channels occupied by the second terminal apparatus to send the physical sidelink channel in the first slot. The resource pool is a V2X communication resource pool in which the first terminal apparatus and the second terminal apparatus are located. This is uniformly described herein, and details are not described below.

Optionally, resource usage statuses of the M sub-channels may be indicated by M bits. For example, it is assumed that a value of M is 10, the first information is "1010001011", and a high bit to a low bit respectively correspond to a sub-channel 0 to a sub-channel 9. "1" indicates that the sub-channels in the first slot are unavailable, and "0" indicates that the sub-channels in the first slot are available. In this case, 1010001011 may indicate that in the first slot, the sub-channels 0, 2, 6, 8, and 9 are unavailable, and the sub-channels 1, 3, 4, 5, and 7 are available. Similarly, the resource usage statuses of the sub-channels other than the $M_1$ sub-channels in the M sub-channels may be indicated by M-M$_1$ bits. A value and a meaning of each bit are described above. Details are not described herein again. In other words, it is assumed that a number of bits included in the first information is $k_1$, $k_1$=M or $k_1$=M-M$_1$.

The following describes a case in which a value of a bit in the first information is "0" or "1" with reference to several specific examples.

For example, a value of a bit in the first information indicates whether a terminal apparatus sends a PSSCH and/or a PSCCH on a sub-channel in the first slot. Specifically, when a terminal apparatus sends a PSSCH and/or a PSCCH on a sub-channel in the first slot, that is, the sub-channel is occupied and is unavailable, a value of a corresponding bit in the first information is "1". On the contrary, when no terminal apparatus sends a PSSCH and/or a PSCCH on the sub-channel in the first slot, a value of a corresponding bit in the first information is "0".

For example, a value of a bit in the first information indicates whether RSRP obtained through measurement on the sub-channel in the first slot exceeds a preset threshold. The preset threshold may be determined based on a priority of data in a PSSCH that is sent by the second terminal apparatus in the first slot. Alternatively, the preset threshold may be determined by using the V2X communication resource pool. For example, when the RSRP obtained through measurement on the sub-channel in the first slot exceeds the preset threshold, that is, the sub-channel is unavailable, a value of a corresponding bit in the first information is "1". On the contrary, when the RSRP obtained through measurement on the sub-channel in the first slot does not exceed the preset threshold, a value of a corresponding bit in the first information is "0".

For example, a value of a bit in the first information indicates whether a sub-channel in the first slot can be preempted. Specifically, when there is SCI indicating that a PSSCH is sent on a sub-channel, but PSSCH decoding fails, it is determined that the sub-channel can be preempted, or when PSSCH decoding on a sub-channel is correct, and if an RSRP obtained through measurement on the sub-channel in the first slot exceeds the preset threshold, but a priority of data on the PSSCH is lower than a priority of the data on the PSSCH sent by the second terminal apparatus in the first slot, it is determined that the sub-channel can be preempted. The preset threshold is determined based on the priority of the data on the PSSCH sent by the second terminal apparatus in the first slot. In this case, the sub-channel that is determined to be preemptable is available. Therefore, a value of a corresponding bit in the first information is "0". In this example, in another case other than the foregoing case, a value of a corresponding bit in the first information is "1".

Based on the foregoing solution, in the NR system, when the second terminal apparatus sends the PSSCH and/or the PSCCH in a slot in a resource sensing window, the first terminal apparatus in this embodiment of this application may determine the coordination information including the first information. The first information indicates a resource usage status in the slot for sending the PSSCH and/or PSCCH by the second terminal apparatus. In this way, when performing resource selection subsequently, the second terminal apparatus may select a transmission resource that is not occupied by another terminal apparatus, or select a transmission resource that is occupied by another apparatus but has a lower data priority, without excluding all candidate resources in a slot that corresponds to the slot for sending the PSSCH and/or PSCCH by the second terminal apparatus and that is in the resource selection window, to avoid a possible resource conflict. Therefore, resource utilization can be improved based on this solution.

In another possible implementation, the coordination information further includes second information. The second information indicates that a first reserved resource of the second terminal apparatus collides with a reserved resource of another terminal apparatus. The first reserved resource is a reserved resource closest to the first slot, and the second terminal apparatus sends the physical sidelink channel in the first slot.

Optionally, the first reserved resource includes $M_3$ reserved sub-channel resources.

Optionally, the first reserved resource is indicated by a time resource indicator value (time domain resource indicator value, TRIV) on the physical sidelink channel of the second terminal apparatus; or the first reserved resource is indicated by a resource reservation period on the physical sidelink channel of the second terminal apparatus.

Optionally, in this embodiment of this application, the first reserved resource is used for retransmission of a first transport block TB on the physical sidelink channel of the second terminal apparatus; and/or, the first reserved resource is used for new transmission of a service to which a second TB belongs on the physical sidelink channel of the second terminal apparatus in a next period.

For example, in the NR system, when a value of TRIV is not 0 and a value of the resource reservation period is 0, the first reserved resource may be a reserved resource that is closest to the first slot and that is used for retransmission of a first TB on the PSSCH and/or the PSCCH of the second terminal apparatus. Alternatively, when a value of TRIV is 0 and a value of the resource reservation period is not 0, the first reserved resource may be a reserved resource that is closest to the first slot and that is used for new transmission of a service to which a second TB on the PSSCH and/or the PSCCH of the second terminal apparatus belongs in a next period. Alternatively, when a value of TRIV is not 0 and a value of the resource reservation period is not 0, the first reserved resource may be a reserved resource that is closest to the first slot and that is used for retransmission of a first TB on the PSSCH and/or the PSCCH of the second terminal apparatus, or the first reserved resource may be a reserved resource that is closest to the first slot and that is used for new transmission of a service to which a second TB on the PSSCH and/or the PSCCH of the second terminal apparatus belongs in a next period, or the first reserved resource may be a reserved resource that is closest to the first slot and that is used for retransmission of a first TB on the PSSCH and/or the PSCCH of the second terminal apparatus, that is closest to the first slot, and that is used for new transmission of a service to which a second TB on the PSSCH and/or the PSCCH of the second terminal apparatus belongs in a next period.

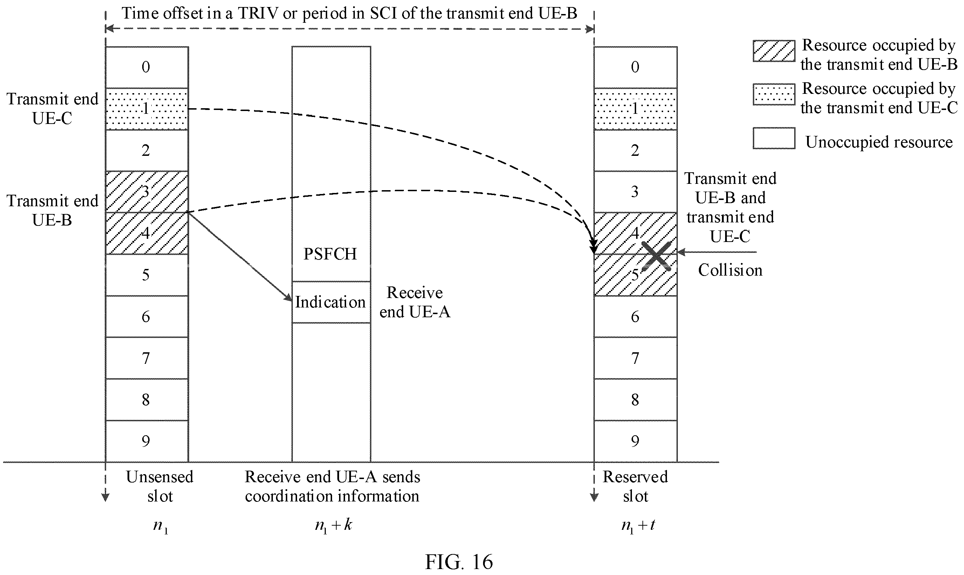

For example, as shown in FIG. 16, it is assumed that a transmit end UE-B sends a PSSCH and/or PSCCH signal on a sub-channel 3 and a sub-channel 4 in a slot $n_1$, and reserves resources of a sub-channel 4 and a sub-channel 5 in a slot $n_1 + t$, that is, $M_3$=2. Because the transmit end UE-B cannot sense in the slot $n_1$, the transmit end UE-B cannot obtain resource reservation information of another UE. It is assumed that a transmit end UE-C also sends a PSSCH and/or PSCCH signal on a sub-channel 1 in the slot $n_1$, and the transmit end UE-C also reserves resources/a resource of the sub-channel 4 and/or the sub-channel 5 in the slot $n_1 + t$. In other words, the reserved resources of the transmit end UE-B and the transmit end UE-C in the slot $n_1 + t$ overlap in frequency domain or partially overlap in frequency domain. In this case, the transmit end UE-B or the transmit end UE-C cannot learn that a collision may occur in the future. If a receive end UE-A can detect the collision, the receive end UE-A may notify the transmit end by using the second information that the reserved resource of the UE-B collides with a reserved resource of another UE (for example, the transmit end UE-C). For example, the second information may indicate that the reserved resource of the transmit end UE-B in the slot $n_1 + t$ collides with a reserved resource of another UE (for example, the transmit end UE-C). A sending slot of the second information may be the slot shown in FIG. 16. For selection of the sending slot of the second information, refer to descriptions in S1502. Details are not described herein again.

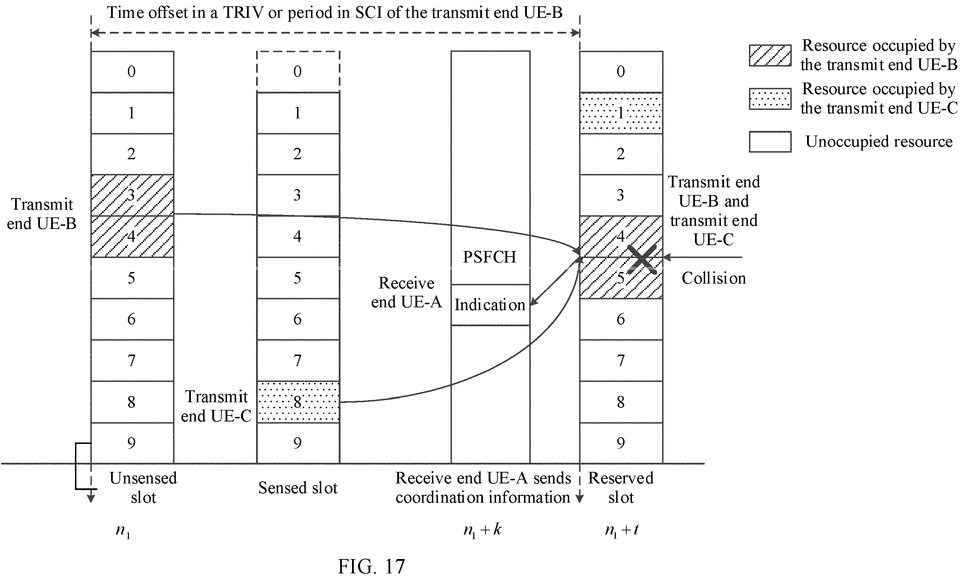

Alternatively, for example, as shown in FIG. 17, it is assumed that a transmit end UE-B sends a PSSCH and/or PSCCH signal on a sub-channel 3 and a sub-channel 4 in a slot $n_1$, and reserves resources of a sub-channel 4 and a sub-channel 5 in a slot $n_1 + t$, that is, $M_3$=2. Because the transmit end UE-B cannot sense in the slot $n_1$, the transmit end UE-B cannot obtain resource reservation information of another UE. It is assumed that a transmit end UE-C also sends a PSSCH and/or PSCCH signal on a sub-channel 8 in a slot between the slot $n_1$ and a slot $n_1 + k$, and the transmit end UE-C also reserves resources/a resource of the sub-channel 4 and/or the sub-channel 5 in the slot $n_1 + t$. In other words, the reserved resources of the transmit end UE-B and the transmit end UE-C in the slot $n_1 + t$ overlap in frequency domain or partially overlap in frequency domain. In this case, the transmit end UE-B or the transmit end UE-C cannot learn that a collision may occur in the future. If a receive end UE-A can detect the collision, the receive end UE-A may notify the transmit end by using the second information that the reserved resource of the UE-B collides with a reserved resource of another UE (for example, the transmit end UE-C). For example, the second information may indicate that the reserved resource of the transmit end UE-B in the slot $n_1 + t$ collides with a reserved resource of another UE (for example, the transmit end UE-C). A sending slot of the second information may be the slot $n_1 + k$ shown in FIG. 17. For selection of the sending slot of the second information, refer to descriptions in S1502. Details are not described herein again.

Optionally, the second information may have a length of 1 bit, indicating whether the first reserved resource of the second terminal apparatus collides with a reserved resource of another terminal apparatus. For example, with reference to the example shown in FIG. 16 or FIG. 17, the second information indicates whether a reserved resource corresponding to the PSSCH and/or the PSCCH sent by the transmit end UE-B in the slot $n_1$ collides with a reserved resource of another UE.

Alternatively, optionally, the second information may have a length of $M_3$ bits, indicating whether each of $M_3$ sub-channel resources reserved in the first reserved resource of the second terminal apparatus collides with a reserved resource of another terminal apparatus. For example, with reference to the example shown in FIG. 16 or FIG. 17, the second information indicates whether the reserved $M_3$ sub-channel resources corresponding to the PSSCH and/or the PSCCH sent by the transmit end UE-B in the slot $n_1$ collide with a reserved resource of another UE. For example, a bit value "1" indicates that a collision occurs, and a bit value "0" indicates that a collision does not occur. In this case, second information "11" indicates that in the slot $n_1$ +t, the sub-channel 4 and the sub-channel 5 reserved by the transmit-end UE-B collide with a sub-channel resource reserved by another UE. Alternatively, second information "10" indicates that in the slot $n_1 + t$, the sub-channel 4 reserved by the transmit end UE-B may collide with a sub-channel resource reserved by another UE, but the sub-channel 5 reserved by the transmit end UE-B does not collide with a sub-channel resource reserved by another UE.

In a possible implementation, in the example shown in FIG. 16 or FIG. 17, the first reserved resource (namely, the sub-channel 4 and the sub-channel 5 in the slot $n_1 + t$) of the transmit end UE-B may be used for retransmission of a same TB transmitted on the PSSCH and/or PSCCH transmitted in the slot $n_1$. In this case, the first reserved resource may be indicated by TRIV of first-level control information corresponding to the PSSCH and/or the PSCCH of the transmit end UE-B. In this case, it is assumed that a number of bits included in the second information is $k_2$, $k_2$=1 or $k_2$=$M_3$.

In another possible implementation, in the example shown in FIG. 16 or FIG. 17, the first reserved resource (namely, the sub-channel 4 and the sub-channel 5 in the slot $n_1 + t$) of the transmit end UE-B may be used for new transmission of a service to which a TB transmitted on the PSSCH and/or PSCCH transmitted in the slot $n_1$ in a next period belongs. In this case, the first reserved resource may be indicated by a resource reservation period (resource reservation period) of first-level control information corresponding to the PSSCH and/or the PSCCH of the transmit end UE-B. In this case, it is assumed that a number of bits included in the second information is $k_3$, $k_3$=1 or $k_3$=$M_3$.

It can be learned from the foregoing that, in the hidden terminal scenario shown in FIG. 1, the first terminal in this embodiment of this application may determine the coordination information including the second information. The second information indicates that the first reserved resource of the second terminal apparatus collides with a reserved resource of another terminal apparatus. The first reserved resource is a reserved resource closest to the slot for sending the physical sidelink channel. Because the second terminal apparatus and other terminal apparatuses cannot sense the presence of each other through sensing, when the second terminal apparatus sends a signal 1 to the first terminal apparatus, and another terminal apparatus in the other terminal apparatuses sends a signal 2 to the first terminal apparatus, a transmission resource of the signal 1 and a transmission resource of the signal 2 may overlap. Consequently, the signal 1 collides with the signal 2, to affect signal reception of the first terminal apparatus. In this embodiment of this application, the first terminal apparatus may determine the coordination information including the second information, to trigger the second terminal apparatus or another terminal apparatus to perform collision confirmation or reselect a transmission resource, thereby achieving technical effect of reducing a collision probability.

The first terminal apparatus may determine the coordination information based on resource reservation information included in the physical sidelink channel sent by the second terminal apparatus. When the second terminal apparatus performs one-shot sending in the first slot, that is, the second terminal apparatus does not reserve a resource, the first terminal apparatus may determine only the first information to notify the second terminal apparatus of a resource usage status in the first slot, to assist the second terminal apparatus in selecting a subsequent transmission resource. When the second terminal apparatus reserves a transmission resource on the physical sidelink channel sent in the first slot, the first terminal apparatus may determine the second information that indicates that the first reserved resource of the second terminal apparatus collides with reserved resources of other terminal apparatuses. In this case, the foregoing two possible implementations are included. It is assumed that a length of the coordination information is S bits, S=$k_1$, S=$k_2$, or S=$k_3$.

Optionally, when the second terminal apparatus has a reserved resource, the first terminal apparatus may determine at least one of three types of coordination information. The three types of coordination information respectively correspond to two possible implementations of the first information and the second information. In a possible implementation, when the coordination information configured in the V2X communication resource pool includes three types of coordination information, the coordination information may further include indication information, and the indication information indicates that the coordination information includes the first information and/or the second information. That is, the indication information indicates whether the coordination information includes valid first-type coordination information, whether the coordination information includes valid second-type coordination information, and whether the coordination information includes valid third-type coordination information. It is assumed that the bit value 1 indicates that the valid first-type coordination information, second-type coordination information, or third-type coordination information is included, and bits corresponding to the first-type coordination information, the second-type coordination information, or the third-type coordination information are sorted in descending order. If a value of the indication information is "100", it indicates that the first terminal apparatus determines only the first-type coordination information. If the indication information is "101", it indicates that the first terminal apparatus determines the first-type coordination information and the third-type coordination information.

Optionally, the indication information may be located before the three types of coordination information, so that the second terminal apparatus can identify different types included in the received coordination information, and select a transmission resource based on the coordination information, thereby achieving technical effect of improving resource utilization and/or reducing a collision probability.

When the coordination information further includes indication information, it is assumed that a length of the coordination information is S bits, and a length of the indication information is p bits, S=p+sum($k_i$), where sum() represents a sum, represents a type of the coordination information determined by the first terminal apparatus, and a value of i may be 1, 2, or 3.

S1502: The first terminal apparatus sends the coordination information to the second terminal apparatus. Correspondingly, the second terminal apparatus receives the coordination information from the first terminal apparatus. A sequence carrying the coordination information is mapped to a first time-frequency resource, the first time-frequency resource is a subset of a second time-frequency resource, and the second time-frequency resource and a physical sidelink feedback resource overlap in time domain, and are orthogonal in frequency domain.

In a possible implementation, a slot in which the second time-frequency resource is located is a slot that is after a first slot and in which a first physical sidelink feedback resource is located at a gap greater than K1 slots from a last symbol in the first slot, and the second terminal apparatus sends a physical sidelink channel in the first slot.

In another possible implementation, a slot in which the second time-frequency resource is located is a slot that is before a second slot and in which a first physical sidelink feedback resource is located at a gap greater than $K_2$ slots from a first symbol in the second slot. The second slot is a slot in which a first reserved resource of the second terminal apparatus is located, the first reserved resource is a reserved resource closest to the first slot, and $K_1$ or $K_2$ is a minimum time gap configured by a higher layer for sending the coordination information. Alternatively, $K_1$ or $K_2$ is a minimum time gap K fed back by HARQ-ACK in the conventional technology.

Optionally, when both $K_1$ and $K_2$ are configured at the higher layer, a sending slot determined by using $K_1$ or a sending slot determined by using $K_2$ may be selected to send the coordination information. In a possible implementation, the sending slot determined by using $K_1$ is before the sending slot determined by using $K_2$. Therefore, an advantage of selecting the sending slot determined by using $K_1$ to send the coordination information is that the second terminal apparatus may be prompted as early as possible, to trigger the second terminal apparatus to perform SL resource selection, reselection, or collision confirmation as early as possible. An advantage of selecting the sending slot determined by using $K_2$ to send the coordination information is that more time may be provided to the first terminal apparatus, so that the first terminal apparatus generates more comprehensive and reliable coordination information.

It should be noted that the sending slot determined by using $K_1$ is more suitable for sending the coordination information including the first information, and the sending slot determined by using $K_2$ is more suitable for sending the coordination information including the second information. Certainly, the coordination information including the second information may alternatively be sent by using the sending slot determined by using $K_1$, and the coordination information including the first information may be sent by using the sending slot determined by using $K_2$. This is not specifically limited in this embodiment of this application.

Optionally, the second time-frequency resource includes J*M third time-frequency resources, and the J*M third time-frequency resources are sequentially allocated to M sub-channels in J slots in a manner of frequency domain first and then time domain. The J slots are slots corresponding to the second time-frequency resource determined based on $K_1$ or $K_2$, and M is a number of sub-channels configured in a resource pool. Herein, that the second time-frequency resource includes J*M third time-frequency resources may be understood as that the second time-frequency resource includes the J*M third time-frequency resources, or the second time-frequency resources are evenly divided into the J*M third time-frequency resources in bandwidth.

Optionally, the first time-frequency resource includes $M_1$ third time-frequency resources in the J*M third time-frequency resources. $M_1$ is a number of sub-channels occupied by the second terminal apparatus to transmit and send a physical sidelink channel in the first slot, and $M_1$ is a positive integer less than or equal to M.

For example, in the NR system, a slot in which the physical sidelink feedback resource is located may be a PSFCH slot corresponding to a PSSCH and/or a PSCCH sent by the second terminal apparatus.

Specifically, the mapping, to a first time-frequency resource, a sequence carrying the coordination information mainly includes the following steps.

First, the sequence carrying the coordination information is determined.

For example, a method similar to that in Table 1 may be used. That is, two sequences may be generated based on values of two $m_{cs}$, to correspond to different values of a same bit. In this case, to-be-sent coordination information whose length is S bits requires 2*S sequences in total, which may also be referred to as S sequence pairs. Each sequence pair includes two sequences whose bit values are respectively "0" and "1". The sequence Seq(2*i) may be a sequence corresponding to the bit value "0", and the sequence Seq(2*i+1) may be a sequence corresponding to the bit value "1", where i represents a sequence number of a sequence pair, and i=0, 1, ..., S-1. The first terminal apparatus may select, based on the to-be-sent coordination information, S sequences from the S sequence pairs to send.

Alternatively, for example, a carrying manner in which four sequences correspond to two bits of coordination information may be used. In this case, to-be-sent coordination information whose length is S bits requires 4*ceil (S/2) sequences in total, which may also be referred to as a set of ceil (S/2) sequences, and ceil indicates rounding up. Each sequence set includes four sequences whose bit values are respectively "00", "01", "11", and "10". The sequence Seq(4*i) may be a sequence corresponding to the bit value "00". The sequence Seq(4*i+1) may be a sequence corresponding to the bit value "01". The sequence Seq(4*i+2) may be a sequence corresponding to the bit value "11". The sequence Seq(4*i+3) may be a sequence corresponding to the bit value "10", where i represents a sequence number of an ordered set, and i=0, 1, ..., and ceil(S/2)-1. The first terminal apparatus may select, based on the to-be-sent coordination information, ceil (S/2) sequences from the ceil (S/2) sequence sets to send.

Based on comparison between the foregoing two examples, on a side of the second terminal apparatus, because each sequence needs to be detected, calculation amounts of the two implementations are basically equal. However, on the side of the second terminal apparatus, the manner of selecting ceil (S/2) sequences from ceil (S/2) sequence sets to send may reduce a number of sequences that need to be sent by half compared with the manner of selecting S sequences from S sequence pairs to send.

Then, a time domain location of the second time-frequency resource is determined.

In this embodiment of this application, because the sequence carrying the coordination information is mapped to the first time-frequency resource, the first time-frequency resource is a subset of the second time-frequency resource, the second time-frequency resource and the physical sidelink feedback resource overlap in time domain, and are orthogonal in frequency domain. Therefore, this step is equivalent to determining a sending slot of the coordination information.

In a possible implementation, the example shown in FIG. 16 is used as an example. The sending slot of the coordination information may be the slot $n_1 + k$ shown in FIG. 16. The slot $n_1 + k$ is a first PSFCH slot at a gap greater than $K_1$ slots from a last symbol of a slot $n_1$ after the slot $n_1$ is sent on the PSSCH and/or PSCCH of the transmit end UE-B. $K_1$ is a minimum time gap for sending the coordination information. That is, $k \geq K_1$, and $n_1 + k$ is a PSFCH slot closest to $n_1$ after the slot $n_1$ is sent on the PSSCH and/or PSCCH of the transmit end UE-B.

In another possible implementation, the example shown in FIG. 16 is used as an example. The sending slot of the coordination information may alternatively be the slot $n_1 + k$ shown in FIG. 17. The slot $n_1 + k$ is a first PSFCH slot that is before a slot $n_1 + t$ in which a first reserved resource of the transmit end UE-B is located and that is at a gap greater than $K_2$ slots from a first symbol of the slot $n_1 + t$. $K_2$ is a minimum time gap for sending the coordination information. The first reserved resource may be indicated by a TRIV or a resource reservation period of the first-level control information corresponding to the PSSCH and/or the PSCCH of the transmit end UE-B. That is, $k \leq t\text{-}K_2$, and $n_1 + k$ is a PSFCH slot that is before the slot $n_1 + t$ in which the first reserved resource of the transmit end UE-B is located, and that is closet to $n_1 + t$.

Then, the frequency domain location of the second time-frequency resource is determined.

In this embodiment of this application, the second time-frequency resource is orthogonal to the PSFCH resource for sending HARQ-ACK information in the conventional technology in frequency domain. Specifically, in the conventional technology, as described above, the V2X communication resource pool configures a bit map for HARQ-ACK feedback, and the bit map indicates whether each PRB is a PSFCH resource available for HARQ-ACK feedback. If "1" in the bit map indicates that a corresponding PRB is a PSFCH resource available for HARQ-ACK feedback, in this embodiment of this application, a bit "0" indicates that the corresponding PRB is available for sending coordination information.

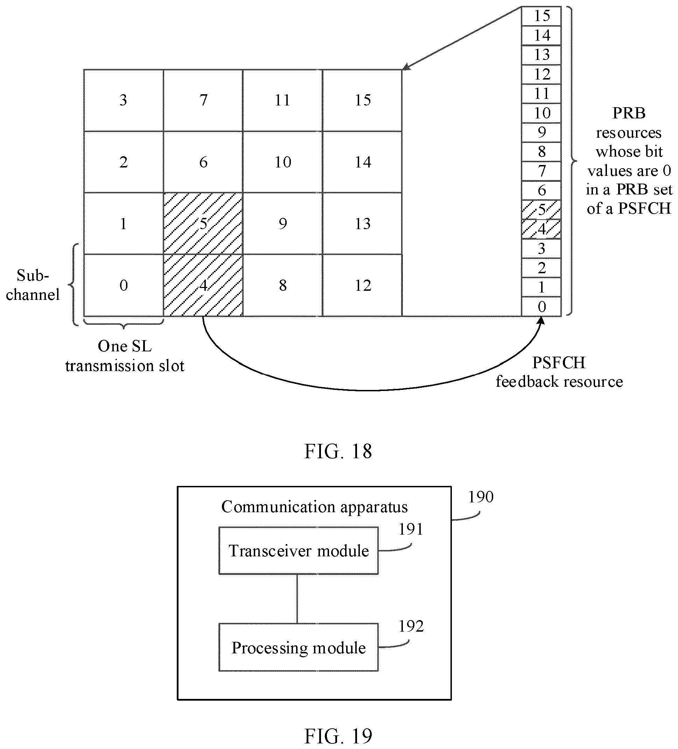

For example, as shown in FIG. 18, the first time-frequency resource may be understood as a set of PRBs numbered 4 and 5 in a PSFCH slot, and the second time-frequency resource may be understood as a set of PRBs numbered 0 to 15 in a PSFCH slot. The second time-frequency resource includes 15 third time-frequency resources, and each third time-frequency resource includes one PRB.

In this embodiment of this application, the J*M third time-frequency resources are sequentially allocated to the M sub-channels in the J slots in a manner of frequency domain first and then time domain. M is a number of sub-channels configured in a resource pool. The J slots are slots corresponding to the second time-frequency resource determined based on $K_1$ or $K_2$. Optionally, $K_1$ or $K_2$ may be a minimum time gap K for HARQ-ACK feedback in the conventional technology. The second time-frequency resource is related to a period configuration parameter $N_{PSSCH}^{PSFCH}$. Therefore, J is related to the period configuration parameter $N_{PSSCH}^{PSFCH}$ of the PSFCH resource, and $J \leq N_{PSSCH}^{PSFCH}$. In a possible implementation, $J = N_{PSSCH}^{PSFCH}$, and in a possible implementation, $J < N_{PSSCH}^{PSFCH}$. In other words, the J slots are all or part of slots in a binding window indicated by the bitmap configured for the V2X communication resource pool. It is expressed by using a formula. It is assumed that the second time-frequency resource includes P PRBs in total. In this case, each third time-frequency resource includes $Q = floor(P/(J * N_{subch}))$ PRB resources, where $N_{subch}$ is a number of sub-channels configured in the V2X communication resource pool, and $P \geq J * N_{subch}$, and floor () indicates rounding down. For an $i^{th}$ SL transmission slot in the bound PSSCH slots, if a number of a sub-channel in the V2X communication resource pool in the SL transmission slot is $j$, a third time-frequency resource corresponding to a sub-channel $j$ in the SL transmission slot is:

$$[(j + i \cdot N_{PSSCH}^{PSFCH}) \cdot Q, (j + 1 + i \cdot N_{PSSCH}^{PSFCH}) \cdot Q - 1],$$

where

$$0 \leq i \leq J$$

and $0 \leq j < N_{subch}$.

In this embodiment of this application, it can be learned from FIG. 18 that if the transmit end UE-B occupies two sub-channels, in a second SL transmission slot to send a PSSCH, for example, PSSCHs numbered 4 and 5, the first time-frequency resource of the sequence carrying the coordination information corresponding to the PSSCH is a set of a fourth third time-frequency resource and a fifth third time-frequency resource. The fourth third time-frequency resource is a fourth third time-frequency resource with Q PRB resources numbered 4, the fifth third time-frequency resource is a fifth third time-frequency resource with Q PRB resources numbered 5, and Q=1. It can be learned from FIG. 18 that the third time-frequency resource numbered 4 and the third time-frequency resource numbered 5 are continuous in frequency domain of the second time-frequency resource. However, in the conventional technology shown in FIG. 9, PSFCH resources corresponding to PSSCHs numbered 5 and 9 are not continuous in frequency domain.

In this embodiment of this application, when bits "0s" indicated in the bit map are continuous, third time-frequency resources that are of sequences carrying the coordination information and that correspond to PSSCHs are continuous in frequency domain in a manner of frequency domain first and then time domain. Therefore, a time domain peak-to-average ratio of a to-be-sent signal can be reduced, so that when the coordination information is sent, an average power of the signal is increased, and an actual power of each sending sequence is increased, to finally implement technical effect of expanding a signal coverage area.

Finally, a specific mapping location (namely, the first time-frequency resource) of the sequence carrying the coordination information is determined.

It can be learned from the analysis of the foregoing embodiment that, in this embodiment of this application, determining the first time-frequency resource is essentially determining a PRB of a sequence that is in the second time domain frequency and that may be used for carrying the coordination information.

As described above, if the PSSCH and/or the PSCCH sent by the transmit end UE-B occupy one sub-channel, the receive end UE-A may send the coordination information by using Q PRBs. Correspondingly, if the PSSCH and/or the PSCCH sent by the transmit end UE-B occupy Z sub-channels, the receive end UE-A may send the coordination information by using Q*Z PRBs. In addition, the Q*Z PRBs are continuous in frequency domain of the second time-frequency resource. A number of sequence resource sets carrying the coordination information is

$$R = Q*Z*N_{CS}^{PSFCH}$$ . $N_{CS}^{PSFCH}$ is a number of cyclic shift sequence pairs that can be multiplexed in one PRB configured in the V2X communication resource pool.

In a unicast scenario, only the receive end UE-A sends the coordination information to the transmit end UE-B. With reference to the foregoing example of the manner of selecting S sequences from S sequence pairs to send, in a possible implementation, PRB resources corresponding to sequences Seq (2*i) and Seq (2*i+1) carrying the coordination information are $\left\lfloor i / N_{CS}^{PSFCH} \right\rfloor$ , and a cyclic shift index value is $i \bmod N_{CS}^{PSFCH}$ . In addition, the value $m_0$ of the sequence is determined based on Table 3, and then a $m_{CS}$ value of the sequence is determined based on the following Table 6. In another possible implementation, a PRB resource corresponding to the sequences Seq (2*i) and Seq (2*i+1) carrying the coordination information is (i)mod(Q*Z), and a cyclic shift index value is $\left\lfloor i / (Q*Z) \right\rfloor$ . In addition, a $m_0$ value of the sequence is determined based on Table 3, and a $m_{CS}$ value of the sequence is determined based on the following Table 6.

Table 6

| Bit value in a sequence pair | 0 | 1 |
|---|---|---|
| Sequence cyclic shift | $m_{cs} = 0$ | $m_{cs} = 6$ |

A difference between the foregoing two implementations is that, in one implementation, the transmit end UE-A sequentially maps a to-be-sent sequence carrying the coordination information to a physical resource set of a PSFCH slot in a manner of code domain first and then frequency domain, and in another implementation, a mapping manner is a manner of frequency domain first and then code domain.

With reference to an example of a manner of selecting ceil (S/2) sequences from the ceil (S/2) sequence sets to send, for sequences Seq(4*i), Seq(4*i+1), Seq(4*i+2), and Seq(4*i+3) carrying the coordination information, a process of determining the PRB resource and the cyclic shift index value is the same as that in the foregoing example 6, and $m_{cs}$, and $m_0$ may be determined based on the following Table 7 and Table 8 respectively.

**Table 7**

| Bit value in a sequence pair | 00 | 01 | 11 | 10 |
|---|---|---|---|---|
| Sequence cyclic shift | $m_{cs} = 1$ | $m_{cs} = 4$ | $m_{cs} = 7$ | $m_{cs} = 10$ |

## Table 8

| $m_0$ / Cyclic shift index $N_{CS}^{PSFCH}$ | 0 | 1 | 2 | 3 | 4 | 5 |
|---|---|---|---|---|---|---|
| 1 | 0 | - | - | - | - | - |
| 2 | 0 | 3 | - | - | - | - |
| 3 | 0 | 2 | 4 | - | - | - |

In a multicast or broadcast scenario, that is, in addition to the receive end UE-A, another receive end UE may also send coordination information to the transmit end UE-B. In this case, a number of receive end UEs for the transmit end UE-B is large. Because the second time-frequency resource is limited, there may be a case in which the first time-frequency resource cannot be allocated to each receive end UE. In this embodiment of this application, a plurality of receive end UEs may jointly send the coordination information by using a same first time-frequency resource. In addition, to avoid ambiguity on a side of the transmit end UE-B that receives the coordination information, the plurality of receive end UEs may feed back only a sequence corresponding to a bit "1". A process of determining a specific mapping location of the sequence is same as a process of determining the specific mapping location of the sequence carrying the coordination information in the example in which ceil (S/2) sequences are selected from the ceil (S/2) sequence sets to send, and the example in which S sequences are selected from S sequence pairs to send. Details are not described herein again.

S1503: The second terminal apparatus determines a sidelink sending resource based on the coordination information.

In a possible implementation, the second terminal apparatus may select, based on the coordination information, a transmission resource that is not occupied by another UE, or select a transmission resource that is occupied by another UE but has a lower data priority.

In another possible implementation, the second terminal apparatus may trigger collision confirmation or a transmission resource reselection process based on a resource collision result indicated in the coordination information.

In this embodiment of this application, the sequence carrying the coordination information is mapped to the first time-frequency resource, the first time-frequency resource is the subset of the second time-frequency resource, and the second time-frequency resource and the physical sidelink feedback resource overlap in time domain, and are orthogonal in frequency domain. Because the physical sidelink feedback resource is less than one SL transmission slot in time domain, the coordination information is sent by using the subset of the second time-frequency resource that overlaps the PSFCH resource in time domain. Sending of the coordination information only needs to occupy some time domain resources in one SL transmission slot, without occupying at least one sub-channel in the entire slot, so that resource overheads for transmitting and sending the coordination information can be reduced. Especially when a plurality of pieces of coordination information need to be transmitted and sent, sending efficiency of other information transmission can be ensured.

It may be understood that, in the foregoing embodiments, the method and/or the step implemented by the first terminal apparatus may also be implemented by a component (for example, a chip or a circuit) that can be used in the first terminal apparatus, and the method and/or the step implemented by the second terminal apparatus may also be implemented by a component (for example, a chip or a circuit) that can be used in the second terminal apparatus.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the first terminal apparatus in the foregoing method embodiment, or an apparatus including the foregoing first terminal apparatus, or a component that can be used in the first terminal apparatus. Alternatively, the communication apparatus may be the second terminal apparatus in the foregoing method embodiment, or an apparatus including the foregoing second terminal apparatus, or a component that can be used in the second terminal apparatus. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software.

Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 19 is a schematic diagram of a structure of a communication apparatus 190. The communication apparatus 190 includes a transceiver module 191 and a processing module 192. The transceiver module 191 may also be referred to as a transceiver unit, and is configured to implement a transceiver function. For example, the transceiver module may be a transceiver circuit, a transceiver machine, a transceiver, or a communication interface.

That the communication apparatus 190 is the first terminal apparatus in the foregoing method embodiment is used as an example.

The processing module 192 is configured to determine coordination information, where the coordination information is used to assist the second terminal apparatus in determining a sidelink channel resource. The transceiver module 191 is configured to send the coordination information to the second terminal apparatus. A sequence carrying the coordination information is mapped to a first time-frequency resource, the first time-frequency resource is a subset of a second time-frequency resource, and the second time-frequency resource and a physical sidelink feedback resource overlap in time domain, and are orthogonal in frequency domain.

That the communication apparatus 190 is the second terminal apparatus in the foregoing method embodiment is used as an example.

The transceiver module 191 is configured to receive coordination information from a first terminal apparatus. A sequence carrying the coordination information is mapped to a first time-frequency resource, the first time-frequency resource is a subset of a second time-frequency resource, and the second time-frequency resource and a physical sidelink feedback resource overlap in time domain, and are orthogonal in frequency domain. The processing module 192 is configured to determine a sidelink transmission resource based on the coordination information.

All related content of the steps in the foregoing method embodiments may be cited in function descriptions of the corresponding functional modules. Details are not described herein again

In this embodiment, the communication apparatus 190 is presented in a form of functional modules obtained through division in an integrated manner. The "module" herein may be a specific ASIC, a circuit, a processor that executes one or more software or firmware programs, a memory, an integrated logic circuit, and/or another component capable of providing the foregoing functions.

When the communication apparatus 190 is the first terminal apparatus in the forging method embodiment. In a simple embodiment, a person skilled in the art may figure out that the communication apparatus 190 may be in a form of the communication apparatus shown in FIG. 14.

For example, the processor 141 or 147 in the first terminal apparatus shown in FIG. 14 may invoke the computer-executable instructions stored in the memory 143, to enable the first terminal apparatus to perform the communication method in the foregoing method embodiment. Specifically, a function/implementation process of the transceiver module 191 and the processing module 192 in FIG. 19 may be implemented by the processor 141 or 147 in the first terminal apparatus shown in FIG. 14 by invoking the computer-executable instructions stored in the memory. Alternatively, functions/implementation processes of the processing module 192 in FIG. 10 may be implemented by the processor 141 or 147 in the first terminal apparatus shown in FIG. 14 by invoking the computer-executable instructions stored in the memory. Functions/implementation processes of the transceiver module 191 in FIG. 19 may be implemented by using the communication interface 144 shown in FIG. 14.

Alternatively, when the communication apparatus 190 is the second terminal apparatus in the foregoing method embodiment, in a simple embodiment, a person skilled in the art may figure out that the communication apparatus 190 may also be in the form shown in FIG. 14. A specific implementation is the same as that in the case in which the communication apparatus 190 is the first terminal apparatus, and details are not described herein again.

The communication apparatus 190 provided in this embodiment can perform the foregoing communication method. Therefore, for technical effects that can be achieved by the communication apparatus 190, refer to the foregoing method embodiments. Details are not described herein again.

It should be noted that one or more of the foregoing modules or units may be implemented by software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system-on-a-chip) or an ASIC, or may be an independent semiconductor chip. In addition to the cores used to execute the software instruction to perform operations or processing, the processor may further include a necessary hardware accelerator, such as a field programmable gate array (field programmable gate array, FPGA), a PLD (programmable logic device), or a logic circuit implementing a dedicated logical operation.

When the foregoing modules or units are implemented by using hardware, the hardware may be any one or any combination of a CPU, a microprocessor, a digital signal processor (digital signal processor, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system. The chip system includes at least one processor and an interface. The at least one processor is coupled to a memory through the interface. When the at least one processor executes a computer program or instructions in the memory, the method according to any one of the foregoing method embodiments is performed. In a possible implementation, the communication apparatus further includes a memory. Optionally, the chip system may include a chip, or may include a chip and another discrete component. This is not specifically limited in embodiments of this application.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

**Claims**

1. A communication method performed by a first terminal apparatus or a component in the first terminal apparatus, wherein the method comprises:

   determining (S1501) coordination information, wherein the coordination information is used to assist a second terminal apparatus in determining a sidelink sending resource; and
   sending (S1502) the coordination information to the second terminal apparatus,
   **characterized in that**
   a sequence carrying the coordination information is mapped to a first time-frequency resource, the first time-frequency resource is a subset of a second time-frequency resource, and the second time-frequency resource and a physical sidelink feedback resource overlap in time domain, and are orthogonal in frequency domain; wherein

   a) a slot in which the second time-frequency resource is located is a slot that is after a first slot and in which a first physical sidelink feedback resource is located at a gap greater than $K_1$ slots from a last symbol in the first slot, and the first slot is used by the second terminal apparatus for sending a physical sidelink channel; or
   b) a slot in which the second time-frequency resource is located is a slot that is before a second slot and in which a first physical sidelink feedback resource is located at a gap greater than $K_2$ slots from a first symbol in the second slot, the second slot is a slot in which a first reserved resource of the second terminal apparatus is located, the first reserved resource is a reserved resource closest to the first slot;

   wherein $K_1$ or $K_2$ is a minimum time gap configured by a higher layer for sending the coordination information.

2. The method according to claim 1, wherein the coordination information further comprises second information, the second information indicates that the first reserved resource of the second terminal apparatus collides with a reserved resource of another terminal apparatus, the first reserved resource is a reserved resource closest to the first slot, and the first slot is used by the second terminal apparatus for sending a physical sidelink channel.

3. The method according to claim 2, wherein the first reserved resource is used for retransmission of a first transport block, TB, on the physical sidelink channel of the second terminal apparatus; and/or
the first reserved resource is used for new transmission of a service to which a second TB belongs on the physical sidelink channel of the second terminal apparatus in a next period.

4. The method according to claim 2 or 3, wherein the first reserved resource is indicated by a time resource indicator value TRIV on the physical sidelink channel of the second terminal apparatus; or
the first reserved resource is indicated by a resource reservation period on the physical sidelink channel of the second terminal apparatus.

5. A communication method performed by a second terminal apparatus or a component in the second terminal apparatus, wherein the method comprises:

   receiving (S 1502) coordination information from a first terminal apparatus; and
   determining (S1503) a sidelink sending resource based on the coordination information;
   **characterized in that**
   a sequence carrying the coordination information is mapped to a first time-frequency resource, the first time-frequency resource is a subset of a second time-frequency resource, and the second time-frequency resource and a physical sidelink feedback resource overlap in time domain, and are orthogonal in frequency domain; and wherein

   a) a slot in which the second time-frequency resource is located is a slot that is after a first slot and in which a first physical sidelink feedback resource is located at a gap greater than $K_1$ slots from a last symbol in the first slot; and the method further comprises sending a physical sidelink channel in the first slot; or
   b) a slot in which the second time-frequency resource is located is a slot that is before a second slot and in which a first physical sidelink feedback resource is located at a gap greater than $K_2$ slots from a first symbol in the second slot, the second slot is a slot in which a first reserved resource of the second terminal apparatus is located, the first reserved resource is a reserved resource closest to the first slot;

   wherein $K_1$ or $K_2$ is a minimum time gap configured by a higher layer for sending the coordination information.

6. The method according to claim 5, wherein the coordination information further comprises second information, the second information indicates that the first reserved resource of the second terminal apparatus collides with a reserved resource of another terminal apparatus, the first reserved resource is a reserved resource closest to the first slot.

7. The method according to claim 6, wherein the first reserved resource is used for retransmission of a first transport block TB on the physical sidelink channel of the second terminal apparatus; and/or
the first reserved resource is used for new transmission of a service to which a second TB belongs on the physical sidelink channel of the second terminal apparatus in a next period.

8. The method according to claim 6 or 7, wherein the first reserved resource is indicated by a time resource indicator value TRIV on the physical sidelink channel of the second terminal apparatus; or
the first reserved resource is indicated by a resource reservation period on the physical sidelink channel of the second terminal apparatus.

9. A computer program product, wherein when the computer program product runs on a computer, the computer is enabled to perform the method according to any one of claims 1 to 4.

10. A computer program product, wherein when the computer program product runs on a computer, the computer is enabled to perform the method according to any one of claims 5 to 8.

11. An apparatus configured to perform the method according to any one of claims 1 to 4.

12. An apparatus configured to perform the method according to any one of claims 5 to 8.

13. A communication system, comprising the communication apparatus according to claim 11, and communication apparatus according to claim 12.

**Patentansprüche**

1. Kommunikationsverfahren, das durch eine erste Endgerätevorrichtung oder eine Komponente in der ersten Endgerätevorrichtung durchgeführt wird, wobei das Verfahren Folgendes umfasst:

Bestimmen (S1501) von Koordinierungsinformationen, wobei die Koordinierungsinformationen dazu verwendet werden, einer zweiten Endgerätevorrichtung beim Bestimmen einer Sidelink-Senderessource zu helfen; und Senden (S1502) der Koordinierungsinformationen an die zweite Endgerätevorrichtung, **dadurch gekennzeichnet, dass** eine Sequenz, welche die Koordinierungsinformationen enthält, auf einer ersten Zeit-Frequenz-Ressource abgebildet wird, die erste Zeit-Frequenz-Ressource ein Teilsatz einer zweiten Zeit-Frequenz-Ressource ist und sich die zweite Zeit-Frequenz-Ressource und eine physikalische Sidelink-Rückmeldungsressource in einer Zeitdomäne überlappen und in einer Frequenzdomäne orthogonal sind; wobei

a) ein Schlitz, in dem sich die zweite Zeit-Frequenz-Ressource befindet, ein Schlitz ist, der nach einem ersten Schlitz liegt und in dem sich eine erste physikalische Sidelink-Rückmeldungsressource in einem größeren Abstand als $K_1$ Schlitzen von einem letzten Symbol in dem ersten Schlitz befindet, und der erste Schlitz durch die zweite Endgerätevorrichtung zum Senden eines physikalischen Sidelink-Kanals verwendet wird; oder
b) ein Schlitz, in dem sich die zweite Zeit-Frequenz-Ressource befindet, ein Schlitz ist, der vor einem zweiten Schlitz liegt und in dem sich eine erste physikalische Sidelink-Rückmeldungsressource in einem größeren Abstand als $K_2$ Schlitzen von einem ersten Symbol in dem zweiten Schlitz befindet, der zweite Schlitz ein Schlitz ist, in dem sich eine erste reservierte Ressource der zweiten Endgerätevorrichtung befindet, die erste reservierte Ressource eine reservierte Ressource ist, die dem ersten Schlitz am nächsten liegt;

wobei $K_1$ oder $K_2$ ein minimaler Zeitabstand ist, der durch eine höhere Schicht zum Senden der Koordinierungsinformationen konfiguriert wird.

2. Verfahren nach Anspruch 1, wobei die Koordinierungsinformationen ferner zweite Informationen umfassen, die zweiten Informationen angeben, dass die erste reservierte Ressource der zweiten Endgerätevorrichtung mit einer reservierten Ressource einer anderen Endgerätevorrichtung zusammenstößt, die erste reservierte Ressource eine reservierte Ressource ist, die dem ersten Schlitz am nächsten liegt, und der erste Schlitz durch die zweite Endgerätevorrichtung zum Senden eines physikalischen Sidelink-Kanals verwendet wird.

3. Verfahren nach Anspruch 2, wobei die erste reservierte Ressource zur erneuten Übertragung eines ersten Transportblocks, TB, auf dem physikalischen Sidelink-Kanal der zweiten Endgerätevorrichtung verwendet wird; und/oder die erste reservierte Ressource für eine neue Übertragung eines Dienstes, zu dem ein zweiter TB gehört, auf dem physikalischen Sidelink-Kanal der zweiten Endgerätevorrichtung in einem nächsten Zeitraum verwendet wird.

4. Verfahren nach Anspruch 2 oder 3, wobei die erste reservierte Ressource durch einen Zeitressourcenindikatorwert TRIV auf dem physikalischen Sidelink-Kanal der zweiten Endgerätevorrichtung angegeben wird; oder die erste reservierte Ressource durch einen Ressourcenreservierungszeitraum auf dem physischen Sidelink-Kanal der zweiten Endgerätevorrichtung angegeben wird.

5. Kommunikationsverfahren, das durch eine zweite Endgerätevorrichtung oder eine Komponente in der zweiten Endgerätevorrichtung durchgeführt wird, wobei das Verfahren Folgendes umfasst:

Empfangen (S1502) von Koordinierungsinformationen von einer ersten Endgerätevorrichtung; und Bestimmen (S1503) einer Sidelink-Senderessource basierend auf den Koordinierungsinformationen; **dadurch gekennzeichnet, dass** eine Sequenz, welche die Koordinierungsinformationen enthält, auf einer ersten Zeit-Frequenz-Ressource abgebildet wird, die erste Zeit-Frequenz-Ressource ein Teilsatz einer zweiten Zeit-Frequenz-Ressource ist und sich die zweite Zeit-Frequenz-Ressource und eine physikalische Sidelink-Rückmeldungsressource in einer Zeitdomäne überlappen und in einer Frequenzdomäne orthogonal sind; und wobei

a) ein Schlitz, in dem sich die zweite Zeit-Frequenz-Ressource befindet, ein Schlitz ist, der nach einem ersten Schlitz liegt und in dem sich eine erste physikalische Sidelink-Rückmeldungsressource in einem größeren Abstand als $K_1$ Schlitzen von einem letzten Symbol in dem ersten Schlitz befindet; und das Verfahren ferner Senden eines physikalischen Sidelink-Kanals in dem ersten Schlitz umfasst; oder

b) ein Schlitz, in dem sich die zweite Zeit-Frequenz-Ressource befindet, ein Schlitz ist, der vor einem zweiten Schlitz liegt und in dem sich eine erste physikalische Sidelink-Rückmeldungsressource in einem größeren Abstand als $K_2$ Schlitzen von einem ersten Symbol in dem zweiten Schlitz befindet, der zweite Schlitz ein Schlitz ist, in dem sich eine erste reservierte Ressource der zweiten Endgerätevorrichtung befindet, die erste reservierte Ressource eine reservierte Ressource ist, die dem ersten Schlitz am nächsten liegt;

wobei $K_1$ oder $K_2$ ein minimaler Zeitabstand ist, der durch eine höhere Schicht zum Senden der Koordinierungsinformationen konfiguriert wird.

6. Verfahren nach Anspruch 5, wobei die Koordinierungsinformationen ferner zweite Informationen umfassen, die zweiten Informationen angeben, dass die erste reservierte Ressource der zweiten Endgerätevorrichtung mit einer reservierten Ressource einer anderen Endgerätevorrichtung kollidiert, die erste reservierte Ressource eine reservierte Ressource ist, die dem ersten Schlitz am nächsten liegt.

7. Verfahren nach Anspruch 6, wobei die erste reservierte Ressource zur erneuten Übertragung eines ersten Transportblocks TB auf dem physikalischen Sidelink-Kanal der zweiten Endgerätevorrichtung verwendet wird; und/oder die erste reservierte Ressource für eine neue Übertragung eines Dienstes, zu dem ein zweiter TB gehört, auf dem physikalischen Sidelink-Kanal der zweiten Endgerätevorrichtung in einem nächsten Zeitraum verwendet wird.

8. Verfahren nach Anspruch 6 oder 7, wobei die erste reservierte Ressource durch einen Zeitressourcenindikatorwert TRIV auf dem physikalischen Sidelink-Kanal der zweiten Endgerätevorrichtung angegeben wird; oder die erste reservierte Ressource durch einen Ressourcenreservierungszeitraum auf dem physischen Sidelink-Kanal der zweiten Endgerätevorrichtung angegeben wird.

9. Computerprogrammprodukt, wobei, wenn das Computerprogrammprodukt auf einem Computer läuft, es dem Computer ermöglicht wird, das Verfahren nach einem der Ansprüche 1 bis 4 durchzuführen.

10. Computerprogrammprodukt, wobei, wenn das Computerprogrammprodukt auf einem Computer läuft, es dem Computer ermöglicht wird, das Verfahren nach einem der Ansprüche 5 bis 8 durchzuführen.

11. Vorrichtung, die dazu konfiguriert ist, das Verfahren nach einem der Ansprüche 1 bis 4 durchzuführen.

12. Vorrichtung, die dazu konfiguriert ist, das Verfahren nach einem der Ansprüche 5 bis 8 durchzuführen.

13. Kommunikationssystem, umfassend die Kommunikationsvorrichtung nach Anspruch 11 und die Kommunikationsvorrichtung nach Anspruch 12.

**Revendications**

1. Procédé de communication réalisé par un premier appareil terminal ou un composant dans le premier appareil terminal, dans lequel le procédé comprend :

la détermination (S1501) d'informations de coordination, dans lequel les informations de coordination sont utilisées pour aider un second appareil terminal à déterminer une ressource d'envoi de liaison latérale ; et l'envoi (S1502) des informations de coordination au second appareil terminal, **caractérisé en ce qu'**une séquence contenant les informations de coordination est mappée sur une première ressource temps-fréquence, la première ressource temps-fréquence est un sous-ensemble d'une seconde ressource temps-fréquence, et la seconde ressource temps-fréquence et une ressource de rétroaction de liaison latérale physique se chevauchent dans le domaine temporel, et sont orthogonales dans le domaine fréquentiel ; dans lequel

a) un intervalle de temps dans lequel la seconde ressource temps-fréquence est située est un intervalle de temps qui est après un premier intervalle de temps et dans lequel une première ressource de rétroaction d'information de liaison latérale physique est située à un intervalle supérieur à $K_1$ intervalles de temps à partir d'un dernier symbole dans le premier intervalle de temps, et le premier intervalle de temps est utilisé par le second appareil terminal pour envoyer un canal de liaison latérale physique ; ou

b) un intervalle de temps dans lequel la seconde ressource temps-fréquence est située est un intervalle de temps qui est avant un second intervalle de temps et dans lequel une première ressource de rétroaction de liaison latérale physique est située à un intervalle supérieur à $K_2$ intervalles de temps à partir d'un premier symbole dans le second intervalle de temps, le second intervalle de temps est un intervalle de temps dans lequel une première ressource réservée du second appareil terminal est située, la première ressource réservée est une ressource réservée la plus proche du premier intervalle de temps ;

dans lequel $K_1$ ou $K_2$ est un intervalle temporel minimal configuré par une couche supérieure pour l'envoi des informations de coordination.

2. Procédé selon la revendication 1, dans lequel les informations de coordination comprennent également de secondes informations, les secondes informations indiquent que la première ressource réservée du second appareil terminal entre en collision avec une ressource réservée d'un autre appareil terminal, la première ressource réservée est une ressource réservée la plus proche du premier intervalle de temps, et le premier intervalle de temps est utilisé par le second appareil terminal pour envoyer un canal de liaison latérale physique.

3. Procédé selon la revendication 2, dans lequel la première ressource réservée est utilisée pour la retransmission d'un premier bloc de transport, TB, sur le canal de liaison latérale physique du second appareil terminal ; et/ou la première ressource réservée est utilisée pour une nouvelle transmission d'un service auquel appartient un second TB sur le canal de liaison latérale physique du second appareil terminal au cours d'une période suivante.

4. Procédé selon la revendication 2 ou 3, dans lequel la première ressource réservée est indiquée par une valeur d'indicateur de ressource temporelle TRIV sur le canal de liaison latérale physique du second appareil terminal ; ou la première ressource réservée est indiquée par une période de réservation de ressource sur le canal de liaison latérale physique du second appareil terminal.

5. Procédé de communication réalisé par un second appareil terminal ou un composant dans le second appareil terminal, dans lequel le procédé comprend :

la réception (S1502) d'informations de coordination à partir d'un premier appareil terminal ; et la détermination (S1503) d'une ressource d'envoi de liaison latérale sur la base des informations de coordination ; **caractérisé en ce qu'**une séquence contenant les informations de coordination est mappée sur une première ressource temps-fréquence, la première ressource temps-fréquence est un sous-ensemble d'une seconde ressource temps-fréquence, et la seconde ressource temps-fréquence et une ressource de rétroaction de liaison latérale physique se chevauchent dans le domaine temporel, et sont orthogonales dans le domaine fréquentiel ; dans lequel

a) un intervalle de temps dans lequel la seconde ressource temps-fréquence est située est un intervalle de temps qui est après un premier intervalle de temps et dans lequel une première ressource de rétroaction d'information de liaison latérale physique est située à un intervalle supérieur à $K_1$ intervalles de temps à partir d'un dernier symbole dans le premier intervalle de temps ; et le procédé comprend également l'envoi d'un canal de liaison latérale physique dans le premier intervalle de temps ; ou

b) un intervalle de temps dans lequel la seconde ressource temps-fréquence est située est un intervalle de temps qui est avant un second intervalle de temps et dans lequel une première ressource de rétroaction de liaison latérale physique est située à un intervalle supérieur à $K_2$ intervalles de temps à partir d'un premier symbole dans le second intervalle de temps, le second intervalle de temps est un intervalle de temps dans lequel une première ressource réservée du second appareil terminal est située, la première ressource réservée est une ressource réservée la plus proche du premier intervalle de temps ;

dans lequel $K_1$ ou $K_2$ est un intervalle temporel minimal configuré par une couche supérieure pour l'envoi des informations de coordination.

6. Procédé selon la revendication 5, dans lequel les informations de coordination comprennent également des secondes informations, les secondes informations indiquent que la première ressource réservée du second appareil terminal entre en collision avec une ressource réservée d'un autre appareil terminal, la première ressource réservée est une ressource réservée la plus proche du premier intervalle de temps.

**7.** Procédé selon la revendication 6, dans lequel la première ressource réservée est utilisée pour la retransmission d'un premier bloc de transport TB sur le canal de liaison latérale physique du second appareil terminal ; et/ou la première ressource réservée est utilisée pour une nouvelle transmission d'un service auquel appartient un second TB sur le canal de liaison latérale physique du second appareil terminal au cours d'une période suivante.

**8.** Procédé selon la revendication 6 ou 7, dans lequel la première ressource réservée est indiquée par une valeur d'indicateur de ressource temporelle TRIV sur le canal de liaison latérale physique du second appareil terminal ; ou la première ressource réservée est indiquée par une période de réservation de ressource sur le canal de liaison latérale physique du second appareil terminal.

**9.** Produit de programme informatique, dans lequel lorsque le produit de programme informatique fonctionne sur un ordinateur, l'ordinateur est activé pour réaliser le procédé selon l'une quelconque des revendications 1 à 4.

**10.** Produit de programme informatique, dans lequel lorsque le produit de programme informatique fonctionne sur un ordinateur, l'ordinateur est activé pour réaliser le procédé selon l'une quelconque des revendications 5 à 8.

**11.** Appareil configuré pour réaliser le procédé selon l'une quelconque des revendications 1 à 4.

**12.** Appareil configuré pour réaliser le procédé selon l'une quelconque des revendications 5 à 8.

**13.** Système de communication, comprenant l'appareil de communication selon la revendication 11, et l'appareil de communication selon la revendication 12.

FIG. 1

FIG. 2

Base station ─────────────────────────────────────────────

Downlink control information

Transmit end
UE ─────────────────────────────────────────────

Sidelink control information
and data

Receive end
UE ─────────────────────────────────────────────

FIG. 3

| Bitmap | | | | Bitmap (repeated) | | | | ... | Bitmap (repeated) | | | |
|---|---|---|---|---|---|---|---|---|---|---|---|---|
| Subframe 0 | Subframe 1 | ... | Subframe 7 | Subframe 8 | Subframe 9 | ... | Subframe 15 | Subframe 16 | | ... | Subframe N | |

FIG. 4

Bitmap: 11001110

| Subframe 0 | Subframe 1 | Subframe 2 | Subframe 3 | Subframe 4 | Subframe 5 | Subframe 6 | Subframe 7 | ... |
|---|---|---|---|---|---|---|---|---|

▨ Subframe for V2X
communication

☐ Common subframe

FIG. 5a

Bitmap: 11001110

| Subframe 0 | Subframe 1 | Subframe 2 | Subframe 3 | Subframe 4 | Subframe 5 | Subframe 6 | Subframe 7 |

...

Subframe or sub-channel for V2X communication

Common subframe or sub-channel

Sequence number of a start PRB

All frequency resources in a system

Sub-channel 1 — $n_{ch}$ PRBs

Sub-channel 2 — $n_{ch}$ PRBs

Sub-channel $N_{subch}$ — $n_{ch}$ PRBs

FIG. 5b

Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13

$N_{PSSCH}^{PSFCH} = 1$

$N_{PSSCH}^{PSFCH} = 2$

$N_{PSSCH}^{PSFCH} = 4$

One SL transmission slot

PSFCH slot

PSSCH resource        PSFCH resource        GAP resource

FIG. 6

EP 4 258 775 B1

|  | Symbol 0 | Symbol 1 | Symbol 2 | ... | Symbol 11 | Symbol 12 | Symbol 13 | Bitmap |
|---|---|---|---|---|---|---|---|---|
| PRB 0 |  |  |  |  | ▨ | ▨ |  | 1 |
| 1 |  |  |  |  | ▨ | ▨ |  | 1 |
| 2 |  |  |  |  | ▨ | ▨ |  | 1 |
| 3 |  |  |  |  | ▨ | ▨ |  | 1 |
| 4 |  |  |  |  |  |  |  | 0 |
| 5 |  |  |  |  |  |  |  | 0 |
| 6 |  |  |  |  |  |  |  | 0 |
| 7 |  |  |  |  |  |  |  | 0 |
| 8 |  |  |  |  |  |  |  | 0 |
| 9 |  |  |  |  |  |  |  | 0 |
| 10 |  |  |  |  | ▨ | ▨ |  | 1 |
| 11 |  |  |  |  | ▨ | ▨ |  | 1 |
| 12 |  |  |  |  | ▨ | ▨ |  | 1 |
| 13 |  |  |  |  | ▨ | ▨ |  | 1 |
| 14 |  |  |  |  |  |  |  | 0 |
| 15 |  |  |  |  |  |  |  | 0 |
| 16 |  |  |  |  |  |  |  | 0 |
| 17 |  |  |  |  |  |  |  | 0 |
| 18 |  |  |  |  |  |  |  | 0 |
| 19 |  |  |  |  |  |  |  | 0 |
| 20 |  |  |  |  | ▨ | ▨ |  | 1 |
| 21 |  |  |  |  | ▨ | ▨ |  | 1 |
| 22 |  |  |  |  | ▨ | ▨ |  | 1 |
| 23 |  |  |  |  | ▨ | ▨ |  | 1 |
| 24 |  |  |  |  |  |  |  | 0 |
| 25 |  |  |  |  |  |  |  | 0 |
| 26 |  |  |  |  |  |  |  | 0 |
| 27 |  |  |  |  |  |  |  | 0 |
| 28 |  |  |  |  |  |  |  | 0 |
| 29 |  |  |  |  |  |  |  | 0 |

Sub-channel 1 (PRB 0–9)
Sub-channel 2 (PRB 10–19)
Sub-channel 3 (PRB 20–29)

▨ PSFCH resource available for HARQ-ACK feedback

FIG. 7

One SL
transmission slot

Length of a PSSCH
binding window

$N_{PSSCH}^{PSFCH} = 4$

PSSCH resource          PSFCH resource

FIG. 8

EP 4 258 775 B1

FIG. 9

FIG. 10

Resource sensing window

Resource selection window

Received SCI

Reserved resource

$n-T_0$

$n-T_{proc,0}$  $n$  $n+T_1$

$n+T_2$

UE 1  UE 2  UE 3  UE 4

UE 1  UE 2  UE 3  UE 4

Exclude

FIG. 11

Exclude all transmission resources in a
slot in a resource selection window that
corresponds to the slot

Sent by UE-B

Sub-channel

Sending resource
unoccupied by UE-B

Sending resource
occupied by UE-B

Resource sensing window

Slot $m$

Slot $n$

Resource selection window

FIG. 12

1303

Network
device

First terminal
device

Second terminal
device

1301

1302

FIG. 13

140

141

147

143

Processor

CPU 0

CPU 1

Processor

CPU 0

CPU 1

142

Memory

144

145

146

Communication
interface

Output device

Input device

FIG. 14

```
┌──────────────┐                              ┌──────────────┐
│ First terminal│                              │Second terminal│
│    device     │                              │    device     │
└──────┬───────┘                              └──────┬───────┘
       │                                             │
┌──────┴──────────────┐                              │
│ S1501: Determine     │                              │
│ coordination information│                           │
└──────┬──────────────┘                              │
       │                                             │
       │  S1502: Send the coordination information   │
       │────────────────────────────────────────────►│
       │                                             │
       │                              ┌──────────────┴──────────┐
       │                              │ S1503: Determine a sidelink│
       │                              │ sending resource based on the│
       │                              │ coordination information  │
       │                              └──────────────┬──────────┘
       │                                             │
```

FIG. 15

Time offset in a TRIV or period in SCI of the transmit end UE-B

Transmit end
UE-C

Transmit end
UE-B

PSFCH

Indication

Receive
end UE-A

Transmit end
UE-B and
transmit end
UE-C

Collision

Resource occupied by
the transmit end UE-B

Resource occupied by
the transmit end UE-C

Unoccupied resource

Unsensed
slot

$n_1$

Receive end UE-A sends
coordination information

$n_1 + k$

Reserved
slot

$n_1 + t$

FIG. 16

EP 4 258 775 B1

Time offset in a TRIV or period in SCI of the transmit end UE-B

Resource occupied by the transmit end UE-B

Resource occupied by the transmit end UE-C

Unoccupied resource

Transmit end UE-B

Transmit end UE-C

Transmit end UE-B and transmit end UE-C

Collision

PSFCH

Receive end UE-A

Indication

Unsensed slot

Sensed slot

Receive end UE-A sends coordination information

Reserved slot

$n_1$

$n_1 + k$

$n_1 + t$

FIG. 17

EP 4 258 775 B1

FIG. 18

FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LG ELECTRONICS**. Feature lead summary for AI 8.11.2.2 Feasibility and benefits for mode 2 enhancements. *3GPP DRAFT, R1-2009788*, 19 November 2020

- **APPLE**. Discussion on Inter-UE Coordination for Mode 2 Resource Allocation. *3GPP DRAFT, R1-2008447*, 01 November 2020
- **LG ELECTRONICS**. Discussion on feasibility and benefits for mode 2 enhancement. *3GPP DRAFT, R1-2007896*, 01 November 2020